(19) Europäisches Patentamt
European Patent Office
Office européen des brevets

(11) **EP 2 578 654 A1**

(12) **EUROPEAN PATENT APPLICATION**

(43) Date of publication:
**10.04.2013 Bulletin 2013/15**

(51) Int Cl.:
*C09J 7/02* (2006.01)  *C09J 5/08* (2006.01)

(21) Application number: **12187290.7**

(22) Date of filing: **04.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.10.2011 JP 2011219890**

(71) Applicants:
• **NITTO DENKO CORPORATION**
  **Osaka 567 (JP)**
• **NITTO EUROPE N.V**
  **3600 Genk (BE)**

(72) Inventors:
• **Yamanaka, Eiji**
  **Ibaraki-shi, Osaka 567-8680 (JP)**

• **Higuchi, Naoaki**
  **Ibaraki-shi, Osaka 567-8680 (JP)**
• **Nakashima, Tooru**
  **Ibaraki-shi, Osaka 567-8680 (JP)**
• **Suzuki, Tatsuya**
  **Ibaraki-shi, Osaka 567-8680 (JP)**
• **Forier, Bart**
  **3600 Genk (BE)**
• **Bossaert, Greet**
  **3600 Genk (BE)**
• **Vandenholt, Myriam**
  **3600 Genk (BE)**

(74) Representative: **Grünecker, Kinkeldey,**
  **Stockmair & Schwanhäusser**
  **Leopoldstrasse 4**
  **80802 München (DE)**

(54) **Heat-expandable removable pressure-sensitive adhesive tape or sheet, and method of removing the same**

(57) To provide a heat-expandable removable pressure-sensitive adhesive tape that maintains a high normal adhesive strength during bonding as well as can be readily separated or debonded by heat for separation or debonding even after the storage or use for a long time, regardless of an adherend type.

The heat-expandable removable pressure-sensitive adhesive tape of the present invention includes at least a blowing agent-containing pressure-sensitive adhesive layer A, a microparticle-containing viscoelastic substrate B, a peelable or peel-assisting film layer C, and a pressure-sensitive adhesive layer D. A multilayer structure containing at least the peelable or peel-assisting film layer C and the pressure-sensitive adhesive layer D is arranged on at least one side of the blowing agent-containing pressure-sensitive adhesive layer A where the blowing agent-containing pressure-sensitive adhesive layer A is in direct contact with the peelable or peel-assisting film layer C. The peelable or peel-assisting film layer C can be removed from the blowing agent-containing pressure-sensitive adhesive layer A by heat treatment after storage in an atmosphere of 75°C for 8 weeks.

[Fig.1]

## Description

## Technical Field

The present invention relates to heat-expandable removable pressure-sensitive adhesive tapes or sheets that maintain good adhesion characteristics during bonding as well as obtain reduced adhesive strength by heat to be readily separated for debonding intended to recycling, reworking, or the like after use and methods of removing the heat-expandable removable pressure-sensitive adhesive tapes or sheets.

## Background Art

Conventionally, base polymers used for acrylic pressure-sensitive adhesives have been prepared by solution polymerization of acrylic monomers mainly containing alkyl (meth)acrylates in an organic solvent. Recently, the reduction of air pollution and other environmental issues is required for the conservation of the global environment. Hence, it is especially advantageous from the viewpoints of safety and environment to produce pressure-sensitive adhesive tapes or sheets (hereinafter, "tape(s) or sheet(s)" is also simply referred to as "tape(s)" or "sheet(s)") including a pressure-sensitive adhesive layer that is formed by ultraviolet polymerization of acrylic monomers without any solvent. In addition, there have been increased demands for saving and recycling resources with increasing environmental awareness.

Meanwhile, among pressure-sensitive adhesive tapes having a pressure-sensitive adhesive layer containing microparticles, acrylic foam-like pressure-sensitive adhesive tapes (acrylic pressure-sensitive adhesive tapes having a substrate and/or a pressure-sensitive adhesive layer containing microparticles) are frequently used in applications that requires adhesive strength and shear strength at room temperature, for example, for bonding parts in various fields such as automobiles, machine parts, electrical appliances, and construction materials. A conventional acrylic foam-like pressure-sensitive adhesive tape has high bonding reliability due to its high adhesive strength, but the high bonding strength conversely makes it difficult to separate or debond the bonded parts. For example, when it is used for fixing LCD modules or backlight units that requires high adhesiveness, level difference absorbing performance, impact absorbability, or the like, in a rework process because of wrong tape attachment during production or in a repair process because of any defect in a test after the attachment, the high adhesiveness causes a problem that the tape cannot be removed or that, even when the tape can be removed, a member is broken at a part where the tape is bonded and thus is not reused.

Under such circumstances, there has been developed a heat-expandable removable acrylic pressure-sensitive adhesive tape that maintains a high normal adhesive strength during bonding as well as obtains reduced adhesive strength by heat for separation or debonding of a bonded part to be readily separated or debonded from the bonded part (see Patent Document 1). The heat-expandable removable acrylic pressure-sensitive adhesive tape includes a blowing agent-containing pressure-sensitive adhesive layer on at least one side of a bubble-bearing microparticle-containing viscoelastic material and thus the adhesive tape satisfies both the adhesive performance and the debonding performance. However, an adhesive performance-oriented tape needs to reduce the amount of the blowing agent in the blowing agent-containing pressure-sensitive adhesive layer, and consequently the debonding performance is likely to be reduced. In contrast, a debonding performance-oriented tape conversely needs to increase the amount of the blowing agent in the blowing agent-containing pressure-sensitive adhesive layer, and consequently the adhesive performance is likely to be reduced. In this manner, there is a trade-off between the adhesive performance and the debonding performance. The heat-expandable removable acrylic pressure-sensitive adhesive tape may not satisfy both the adhesive performance and the debonding performance at a high level depending on an adherend type. The adhesive tape may achieve too high adhesive strength to be debonded depending on an adherend type.

In order to solve the problems of the heat-expandable removable acrylic pressure-sensitive adhesive tape above, there has been developed a heat-expandable removable acrylic pressure-sensitive adhesive tape that includes a peelable or peel-assisting film layer in the pressure-sensitive adhesive tape and that maintains high adhesive strength as well as can be readily separated or debonded by heat regardless of an adherend material (see Patent Document 2). The heat-expandable removable acrylic pressure-sensitive adhesive tape can be removed on the peelable or peel-assisting film layer by heat and readily separated or debonded immediately after the production. However, the adhesive tape may not be readily separated or debonded even by heat after the storage or use for a long time.

## Citation List

## Patent Literature

Patent Document 1: Japanese Unexamined Patent Application Publication No. 2009-120807

Patent Document 2: Japanese Unexamined Patent Application Publication No. 2009-120808

## Summary of Invention

### Technical Problem

Therefore, an object of the present invention is to provide a heat-expandable removable pressure-sensitive adhesive tape or sheet that maintains a high normal adhesive strength during bonding as well as obtains reduced adhesive strength by heat to be readily separated or debonded for separation or debonding even after the storage or use for a long time regardless of an adherend material.

### Solution to Problem

The present inventors have carried out intensive studies in order to solve the problems, and as a result, have found that, when a pressure-sensitive adhesive tape or sheet includes a multilayer structure containing at least a pressure-sensitive adhesive layer and a peelable or peel-assisting film layer on at least one side of a blowing agent-containing pressure-sensitive adhesive layer where the blowing agent-containing pressure-sensitive adhesive layer is in direct contact with the peelable or peel-assisting film layer, and when the adhesive tape or sheet obtains a reduced adhesive strength by heat treatment after storage in an atmosphere of 75°C for 8 weeks to lead to peeling of the peelable or peel-assisting film layer from the blowing agent-containing pressure-sensitive adhesive layer, the obtained removable pressure-sensitive adhesive tape or sheet maintains a high normal adhesive strength during bonding as well as can be readily separated or debonded by expansion or foaming of the blowing agent by heat for separation or debonding even after the storage or use for a long time regardless of an adherend material. The present invention has been made based on these findings.

That is, the present invention provides a heat-expandable removable pressure-sensitive adhesive tape or sheet that includes at least a blowing agent-containing pressure-sensitive adhesive layer A, a microparticle-containing viscoelastic substrate B, a peelable or peel-assisting film layer C, and a pressure-sensitive adhesive layer D. On at least one side of the blowing agent-containing pressure-sensitive adhesive layer A, a multilayer structure containing at least the peelable or peel-assisting film layer C and the pressure-sensitive adhesive layer D is arranged, and the blowing agent-containing pressure-sensitive adhesive layer A is in direct contact with the peelable or peel-assisting film layer C. The peelable or peel-assisting film layer C is optionally removed from the blowing agent-containing pressure-sensitive adhesive layer A by heat treatment after storage in an atmosphere of 75°C for 8 weeks.

It is preferable that the multilayer structure containing at least the peelable or peel-assisting film layer C and the pressure-sensitive adhesive layer D is a multilayer structure composed of the peelable or peel-assisting film layer C and the pressure-sensitive adhesive layer D.

It is preferable that the peelable or peel-assisting film layer C is a plastic film. It is preferable that the peelable or peel-assisting film layer C is composed of at least one resin selected from a polycarbonate resin and an ABS resin.

It is preferable that the microparticle-containing viscoelastic substrate B is a layer formed from a microparticle-containing polymerizable composition that includes a mixture of acrylic monomers containing an alkyl (meth)acrylate including an alkyl group having 2 to 18 carbon atoms or a partial polymer thereof, a photoinitiator, microparticles, and a polyfunctional (meth)acrylate.

It is preferable that the microparticle-containing viscoelastic substrate B includes the microparticles having an average particle diameter of 30 to 100 $\mu$m.

It is preferable that the microparticle-containing viscoelastic substrate B includes the microparticles in an amount of 1 to 20% by weight based on the total weight (100% by weight) of the microparticle-containing viscoelastic substrate B.

It is preferable that the blowing agent-containing pressure-sensitive adhesive layer A is a layer formed from a blowing agent-containing pressure-sensitive adhesive composition that includes a mixture of acrylic monomers containing an alkyl (meth)acrylate including an alkyl group having 2 to 18 carbon atoms or a partial polymer thereof, a photoinitiator, a blowing agent, and a polyfunctional (meth)acrylate and the layer has a solvent-insoluble content of 50 to 99% by weight.

It is preferable that the blowing agent-containing pressure-sensitive adhesive layer A includes a blowing agent that is heat-expandable microspheres.

It is preferable that the blowing agent-containing pressure-sensitive adhesive layer A has a thickness of 1 to 300 $\mu$m.

The present invention also provides a method of removing a heat-expandable removable pressure-sensitive adhesive tape or sheet. The method includes heating a heat-expandable removable acrylic pressure-sensitive adhesive tape or sheet including at least a blowing agent-containing pressure-sensitive adhesive layer A, a microparticle-containing viscoelastic substrate B, a peelable or peel-assisting film layer C, and a pressure-sensitive adhesive layer D, a multilayer structure containing at least the peelable or peel-assisting film layer C and the pressure-sensitive adhesive layer D being arranged on at least one side of the blowing agent-containing pressure-sensitive adhesive layer A, the blowing agent-containing pressure-sensitive adhesive layer A being in direct contact with the peelable or peel-assisting film layer C, the peelable or peel-assisting film layer C being optionally removed from the blowing agent-containing pressure-sensitive adhesive layer A by heat treatment after storage in an atmosphere of 75°C for 8 weeks, and reducing an adhesive strength of the peelable or peel-assisting film layer C to the blowing agent-containing pressure-sensitive adhesive layer A for removing.

**Advantageous Effects of Invention**

The heat-expandable removable pressure-sensitive adhesive tape or sheet of the present invention is composed as above, and hence it maintains a high normal adhesive strength (adhesive strength at 23 ± 2°C and 50 ± 5% RH) during bonding as well as can be readily separated or debonded by heat for separating or debonding a bonded part even after the storage or use for a long time regardless of an adherend material.

**Brief Description of Drawings**

Fig. 1 is a schematic cross-sectional view showing an example of the heat-expandable removable pressure-sensitive adhesive tape or sheet of the present invention.
Fig. 2 is a schematic cross-sectional view showing another example of the heat-expandable removable pressure-sensitive adhesive tape or sheet of the present invention.
Fig. 3 is a schematic cross-sectional view showing a test sample used in the adhesion evaluation of the pressure-sensitive adhesive tape and the heat debonding evaluation of the pressure-sensitive adhesive tape.

**Description of Embodiments**

The heat-expandable removable pressure-sensitive adhesive tape or sheet of the present invention includes at least a blowing agent-containing pressure-sensitive adhesive layer A, a microparticle-containing viscoelastic substrate B, a peelable or peel-assisting film layer C, and a pressure-sensitive adhesive layer D. The heat-expandable removable pressure-sensitive adhesive tape or sheet of the present invention has a structure in which a multilayer structure containing at least the peelable or peel-assisting film layer C and the pressure-sensitive adhesive layer D is arranged on at least one side of the blowing agent-containing pressure-sensitive adhesive layer A and the blowing agent-containing pressure-sensitive adhesive layer A is in direct contact with the peelable or peel-assisting film layer C. Hereinafter, "the heat-expandable removable pressure-sensitive adhesive tape or sheet of the present invention" is also referred to as "the pressure-sensitive adhesive tape of the present invention".
The pressure-sensitive adhesive tape of the present invention has a sheet shape or a tape shape. It may be wound in a roll or may be formed in a stacked sheet.
The pressure-sensitive adhesive tape of the present invention may be a pressure-sensitive adhesive double-coated tape having adhesive faces on both sides, or may be a pressure-sensitive adhesive single-coated tape having an adhesive face on one side. In particular, the pressure-sensitive adhesive tape of the present invention is preferably the pressure-sensitive adhesive double-coated tape because it is advantageously used for bonding articles to each other or for fixing a part at a particular position through the pressure-sensitive adhesive tape. In the pressure-sensitive adhesive tape of the present invention, the pressure-sensitive adhesive layer D provides the adhesive face.

(Blowing Agent-Containing Pressure-Sensitive Adhesive Layer A)

The blowing agent-containing pressure-sensitive adhesive layer A is a layer that contains at least a blowing agent and is composed of an adhesive (pressure-sensitive adhesive). The blowing agent-containing pressure-sensitive adhesive layer A is formed from a composition containing at least the blowing agent. In the present specification, a composition that forms the blowing agent-containing pressure-sensitive adhesive layer A is also referred to as "a blowing agent-containing pressure-sensitive adhesive composition a".
The blowing agent-containing pressure-sensitive adhesive composition a may be in any form, such as an active energy ray curable composition, a thermally curable composition, a solvent composition (solution composition), an emulsion composition, and a hot melt composition. Thus, the blowing agent-containing pressure-sensitive adhesive composition a may also be a composition including a mixture of monomers that form a base polymer (also referred to as "monomer mixture") or a partial polymer thereof as an essential component. The "monomer mixture" means a mixture composed of monomer components alone that form a base polymer. The "partial polymer" means a composition in which one or more components are partially polymerized among components in a monomer mixture.

Among them, the blowing agent-containing pressure-sensitive adhesive composition a preferably includes at least a monomer mixture or a partial polymer thereof, a blowing agent, and a polymerization initiator (for example, a photoinitiator and a thermopolymerization initiator) from the viewpoints of workability and environment as well as because a curing reaction by heat or active energy rays can cure the blowing agent-containing pressure-sensitive adhesive composition a while mixing the blowing agent to form the blowing agent-containing pressure-sensitive adhesive layer A and the blowing agent-containing pressure-sensitive adhesive layer A that stably contains the blowing agent can be readily obtained. That is, the blowing agent-containing pressure-sensitive adhesive composition a is preferably a thermally curable blowing agent-containing pressure-sensitive adhesive composition or an active energy ray curable blowing agent-containing pressure-sensitive adhesive composition. In particular, the blowing agent-containing pressure-sensitive adhesive composition a is more preferably an active energy ray curable blowing agent-containing pressure-sensitive adhesive composition that includes at least a monomer mixture or a partial polymer thereof, a blowing agent, and a photoinitiator because such a composition can readily produce a thick blowing agent-containing pressure-sensitive adhesive layer.

Examples of the base polymer in an adhesive constituting the blowing agent-containing pressure-sensitive adhesive layer A include, but are not necessarily limited to, an acrylic polymer, a rubber polymer, a vinyl alkyl ether polymer, a silicone polymer, a polyester polymer, a polyamide polymer, an urethane polymer, a fluorine polymer, and an epoxy polymer. Among the base polymers, the acrylic polymer is preferred from the viewpoint of easy polymer design and the balance of characteristics. These base polymers are used singly or as a mixture of two or more of them.

Thus, the blowing agent-containing pressure-sensitive adhesive layer A is preferably a layer formed from a blowing agent-containing acrylic pressure-sensitive adhesive composition a, that is, a blowing agent-containing acrylic pressure-sensitive adhesive layer A, and the blowing agent-containing pressure-sensitive adhesive layer A is more preferably a blowing agent-containing acrylic pressure-sensitive adhesive layer A formed by polymerizing and curing a blowing agent-containing acrylic pressure-sensitive adhesive composition a that includes at least an acrylic monomer mixture or a partial polymer thereof, a blowing agent, and a photoinitiator.

In particular, the blowing agent-containing pressure-sensitive adhesive composition a is preferably a blowing agent-containing acrylic pressure-sensitive adhesive composition a that includes a mixture of acrylic monomers containing an alkyl (meth)acrylate including an alkyl group (straight or branched chain alkyl group) having 2 to 18 carbon atoms or a partial polymer thereof, a photoinitiator, a blowing agent, and a polyfunctional (meth)acrylate because such a composition provides a pressure-sensitive adhesive layer having excellent adhesion characteristics. Thus, the blowing agent-containing pressure-sensitive adhesive layer A is preferably a layer formed from the blowing agent-containing acrylic pressure-sensitive adhesive composition a that includes a mixture of acrylic monomers containing an alkyl (meth) acrylate including an alkyl group (straight or branched chain alkyl group) having 2 to 18 carbon atoms or a partial polymer thereof, a photoinitiator, a blowing agent, and a polyfunctional (meth)acrylate. In the present specification, "(meth) acrylate" means "acrylate" and/or "methacrylate" and other terms are alike.

In the blowing agent-containing acrylic pressure-sensitive adhesive composition a that includes the acrylic monomer mixture or a partial polymer thereof as an essential component, the ratio of the acrylic monomer mixture or a partial polymer thereof is not necessarily limited, but a too small ratio may not achieve sufficient tackiness. Hence, the ratio is preferably 50% by weight or more (for example 50 to 90% by weight) and more preferably 60% by weight or more (for example 60 to 90% by weight) based on the total weight (100% by weight) of the blowing agent-containing acrylic pressure-sensitive adhesive composition a.

Examples of the alkyl (meth)acrylate including an alkyl group having 2 to 18 carbon atoms include ethyl (meth)acrylate, n-propyl (meth)acrylate, isopropyl (meth)acrylate, n-butyl (meth)acrylate, sec-butyl (meth)acrylate, t-butyl (meth)acrylate, n-octyl (meth)acrylate, isooctyl (meth)acrylate, 2-ethylhexyl (meth)acrylate, isononyl (meth)acrylate, dodecyl (meth)acrylate, and isostearyl (meth)acrylate. Among them, specifically preferred are alkyl (meth)acrylates including an alkyl group having 4 to 9 carbon atoms, such as 2-ethylhexyl (meth)acrylate, n-butyl (meth)acrylate, n-octyl (meth)acrylate, isooctyl (meth)acrylate, and isononyl (meth)acrylate. These alkyl (meth)acrylates including an alkyl group having 2 to 18 carbon atoms are used singly or as a mixture of two or more of them.

The content of the alkyl (meth)acrylate including an alkyl group having 2 to 18 carbon atoms in the acrylic monomer mixture is not necessarily limited, but such an alkyl (meth)acrylate is preferably contained as an essential component. Hence, the content is preferably 50% by weight or more, more preferably 55% by weight or more, and even more preferably 60% by weight or more, based on the total weight (100% by weight) of monomer components constituting the acrylic monomer mixture.

It is preferable that the acrylic monomer mixture further includes a copolymerizable monomer in addition to the alkyl (meth)acrylate including an alkyl group having 2 to 18 carbon atoms in order to improve cohesive power of the pressure-sensitive adhesive layer and to improve the adhesive characteristics. Such copolymerizable monomers are used singly or as a mixture of two or more of them.

Examples of the copolymerizable monomer include carboxyl group-containing monomers such as acrylic acid, methacrylic acid, carboxyethyl acrylate, carboxypentyl acrylate, itaconic acid, maleic acid, and crotonic acid; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)-methyl acrylate; acid anhydride monomers such as maleic anhydride and itaconic anhydride; sulfonic acid group-containing monomers such as 2-acrylamido-2-methylpropane sulfonic acid and sulfopropyl acrylate; phosphoric acid group-containing monomers such as 2-hydroxyethyl acryloyl phosphate; amide monomers such as (meth)acrylamide and N-substituted (meth)acrylamides including N-methylolacrylamide; succinimide monomers such as N-(meth)acryloyloxymethylene succinimide, 6-N-(meth)acryloyl-oxyhexamethylene succinimide, and 8-N-(meth)acryloyl-oxyoctamethylene succinimide; vinyl monomers such as vinyl acetate, N-vinylpyrrolidone, N-vinylcarboxylic amides, styrene, and N-vinylcaprolactam; cyanoacrylate monomers such as acrylonitrile and methacrylonitrile; acrylic acid ester monomers such as glycidyl (meth)acrylate, tetrahydrofurfuryl (meth)acrylate, polyethylene glycol (meth)acrylate, polypropylene glycol (meth)acrylate, fluorine (meth)acrylate, silicon (meth)acrylate, and 2-methoxyethyl acrylate; alkyl (meth)acrylates including an alkyl group other than the alkyl (meth)acrylates including an alkyl group having 2 to 18 carbon atoms, such as methyl (meth)acrylate and octadecyl (meth)acrylate; and alicyclic acrylates such as isobornyl (meth)acrylate.

Among them, for the copolymerizable monomer, the carboxyl group-containing monomers and the hydroxy group-containing monomers are preferred, and acrylic acid is more preferred.

When the acrylic monomer mixture contains the copolymerizable monomer, the ratio (based on weight) of the alkyl (meth)acrylate including an alkyl group having 2 to 18 carbon atoms/the copolymerizable monomer is preferably 50/50 to 99/1, more preferably 55/45 to 99/1, and even more preferably 60/40 to 99/1.

Examples of the blowing agent contained in the blowing agent-containing pressure-sensitive adhesive layer A include, but are not necessarily limited to, known blowing agents. Among them, preferred examples of the blowing agent include a microencapsulated foaming agent. Examples of the microencapsulated foaming agent include microspheres having an elastic shell including a substance that is readily gasified by heat, such as isobutane, propane, and pentane (also referred to as "heat-expandable microspheres"). Such blowing agents are used singly or as a mixture of two or more of them.

The shell of the heat-expandable microspheres is preferably formed from, for example, a thermoplastic substance, a hot-melt substance, and a substance that explodes by thermal expansion. Examples of the substance that forms the shell of the heat-expandable microspheres include a vinylidene chloride-acrylonitrile copolymer, polyvinyl alcohol, polyvinyl butyral, polymethyl methacrylate, polyacrylonitrile, polyvinylidene chloride, and polysulfone. The heat-expandable microspheres can be produced by a common method such as a coacervation method and an interfacial polymerization method.

Examples of commercial products of the heat-expandable microspheres include trade name "Matsumoto Microsphere F-30", "Matsumoto Microsphere F-50", "Matsumoto Microsphere F-80S", "Matsumoto Microsphere F-80SD", and "Matsumoto Microsphere F-85" (manufactured by Matsumoto Yushi-Seiyaku Co., Ltd.); and trade name "EXPANCEL Du" (manufactured by Akzo Nobel Surface Chemistry AB).

The heat-expandable microspheres preferably have an average particle diameter of 1 to 80 $\mu$m and more preferably 3 to 50 $\mu$m from the viewpoints of dispersibility and thin layer forming performance.

The heat-expandable microspheres preferably has an adequate strength not to explode until the coefficient of volume expansion reaches 5 times or more, especially 10 times or more, by heat treatment because such microspheres efficiently reduce the contact area of the blowing agent-containing pressure-sensitive adhesive layer A with respect to the peelable or peel-assisting film layer C. A pressure-sensitive adhesive tape including heat-expandable microspheres that explode at a low expansion coefficient or a pressure-sensitive adhesive tape including a thermal expanding agent that is not microencapsulated may not sufficiently reduce the contact area (adhesive area) between the pressure-sensitive adhesive tape and an adherend not to achieve good releasability, or may have reduced separation or debonding characteristics, for example, reduced characteristics of debonding the blowing agent-containing pressure-sensitive adhesive layer A from the peelable or peel-assisting film layer C at an interface, by heat.

In the blowing agent-containing pressure-sensitive adhesive composition a constituting the blowing agent-containing pressure-sensitive adhesive layer A, the content of the blowing agent (in particular, heat-expandable microspheres) is not necessarily limited, but for example, is preferably 10 to 200 parts by weight, more preferably 20 to 125 parts by weight, and even more preferably 25 to 100 parts by weight, based on 100 parts by weight of the acrylic monomer mixture. The blowing agent having a content of less than 10 parts by weight may lead to insufficient expansion and deformation of the blowing agent-containing pressure-sensitive adhesive layer A after heat treatment not to cause the separation or debonding by heat, for example, not to cause the peeling of the blowing agent-containing pressure-sensitive adhesive layer A from the peelable or peel-assisting film layer C at an interface as well as such a blowing agent may not sufficiently reduce the contact area between the pressure-sensitive adhesive tape and an adherend, and hence the tape may not be readily removed from an adherend. The blowing agent having a content of more than 200 parts by weight may reduce the adhesiveness of the blowing agent-containing pressure-sensitive adhesive layer A.

Examples of the blowing agent other than the heat-expandable microspheres include various inorganic foaming agents and organic foaming agents. Typical examples of the inorganic foaming agent include ammonium carbonate, ammonium hydrogen carbonate, sodium hydrogen carbonate, ammonium nitrite, sodium borohydride, and azides. Typical examples of the organic foaming agent include water; chlorofluoroalkanes such as trichloromonofluoromethane and dichloromonofluoromethane; azo compounds such as azobisisobutyronitrile, azodicarboxylic amide, and barium azodicarboxylate; hydrazine compounds such as p-toluenesulfonyl hydrazide, diphenylsulfone-3,3'-disulfonyl hydrazide, 4,4'-oxybis(benzenesulfonyl hydrazide), and allylbis(sulfonyl hydrazide); semicarbazide compounds such as p-toluylenesulfonyl semicarbazide and 4,4'-oxybis(benzenesulfonyl semicarbazide); triazole compounds such as 5-morpholyl-1,2,3,4-thiatriazole; and N-nitroso compounds such as N,N'-dinitrosopentamethylenetetramine and N,N'-dimethyl-N,N'-dinitrosoterephthalamide.

When the blowing agent-containing pressure-sensitive adhesive composition a includes a polymerization initiator, examples of the polymerization initiator include a photoinitiator and a thermopolymerization initiator. Such polymerization initiators are used singly or as a mixture of two or more of them.

Examples of the photoinitiator include, but are not necessarily limited to, a benzoin ether photoinitiator, an acetophenone photoinitiator, an $\alpha$-ketol photoinitiator, an aromatic sulfonyl chloride photoinitiator, a photoactive oxime photoinitiator, a benzoin photoinitiator, a benzil photoinitiator, a benzophenone photoinitiator, a ketal photoinitiator, and a thioxanthone photoinitiator.

Specifically, examples of the benzoin ether photoinitiator include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Examples of the acetophenone photoinitiator include 2,2-diethoxyacetophenone, 2,2-dimethoxy-2-phenylacetophenone, 1-hydroxycyclohexyl phenyl ketone, 4-phenoxy dichloroacetophenone, and 4-t-butyl-dichloroacetophenone. Examples of the $\alpha$-ketol photoinitiator include 2-methyl-2-hydroxypropiophenone and 1-[4-(2-hydroxyethyl)-phenyl]-2-hydroxy-2-methylpropan-1-one. Examples of the aromatic sulfonyl chloride photoinitiator include 2-naphthalenesulfonyl chloride. Examples of the photoactive oxime photoinitiator include 1-phenyl-1,2-propanedione-2-(O-ethoxycarbonyl)-oxime. Examples of the benzoin photoinitiator include benzoin. Examples of the benzil photoinitiator include benzil. Examples of the benzophenone photoinitiator include benzophenone, benzoylbenzoic acid, 3,3'-dimethyl-4-methoxybenzophenone, polyvinylbenzophenone, and $\alpha$-hydroxycyclohexyl phenyl ketone. Examples of the ketal photoinitiator include benzil dimethyl ketal. Examples of the thioxanthone photoinitiator include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, and dodecylthioxanthone.

The content of the photoinitiator in the blowing agent-containing pressure-sensitive adhesive composition a is not necessarily limited but is, for example, preferably 0.001 to 5 parts by weight and more preferably 0.01 to 3 parts by weight, based on 100 parts by weight of the acrylic monomer mixture.

For the activation of a photoinitiator, active energy rays are applied. Examples of such active energy rays include ionizing radiation beams such as $\alpha$-rays, $\beta$-rays, $\gamma$-rays, neutron beams, and electron beams and ultraviolet rays, and among them, the ultraviolet rays are especially preferred. Conditions for the application of active energy rays, such as irradiation energy and irradiation time, are not necessarily limited, and any condition can be employed as long as a photoinitiator is activated to cause the reaction of monomer components.

Examples of the thermopolymerization initiator include, but are not necessarily limited to, azo thermopolymerization initiators such as 2,2'-azobisisobutyronitrile, 2,2'-azobis-2-methylbutyronitrile, dimethyl 2,2'-azobis(2-methylpropionate), 4,4'-azobis-4-cyanovaleric acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylproplonamidine) disulfate, and 2,2'-azobis(N,N'-dimethyleneisobutylamidine) dihydrochloride; peroxide thermopolymerization initiators such as dibenzoyl peroxide and tert-butyl permaleate; and redox thermopolymerization initiators. The content of the thermopolymerization initiator in the blowing agent-containing pressure-sensitive adhesive composition a is not necessarily limited and is properly set as long as the effect of the invention is not impaired.

The blowing agent-containing acrylic pressure-sensitive adhesive composition a preferably includes a polyfunctional (meth)acrylate in order to improve cohesive power of the pressure-sensitive adhesive layer by cross-linkages and to further improve adhesive performance of the pressure-sensitive adhesive layer. The polyfunctional (meth)acrylate is a compound that has two or more radical polymerizable carbon-carbon double bonds in the molecule. Such polyfunctional (meth)acrylates are used singly or as a mixture of two or more of them.

Examples of the polyfunctional (meth)acrylate include trimethylolpropane tri(meth)acrylate, tetramethylolmethane tetra(meth)acrylate, pentaerythritol di(meth)acrylate, pentaerythritol tri(meth)acrylate, pentaerythritol tetra(meth)acrylate, 1,2-ethylene glycol di(meth)acrylate, 1,4-butylene glycol di(meth)acrylate, 1,6-hexanediol di(meth)acrylate, 1,12-dodecanediol di(meth)acrylate, dipentaerythritol monohydroxypenta(meth)acrylate, dipentaerythritol hexa(meth)acrylate, polyethylene glycol di(meth)acrylate, hexanediol di(meth)acrylate, (poly)ethylene glycol di(meth)acrylate, (poly)propylene glycol di(meth)acrylate, neopentyl glycol di(meth)acrylate, tetramethylolmethane tri(meth)acrylate, allyl (meth)acrylate, vinyl (meth)acrylate, epoxy acrylate, polyester acrylate, urethane acrylate, and reactive hyperbranched polymers having two or more terminal (meth)acryloyl groups [for example, trade name "CN2300", "CN2301", and "CN2320" (manufactured by Sartomer Company, Inc.)]. A "(meth)acryloyl group" means an "acryloyl group" and/or a "methacryloyl group" and other terms are alike.

When the blowing agent-containing acrylic pressure-sensitive adhesive composition a includes the polyfunctional (meth)acrylate, the content of the polyfunctional (meth)acrylate is not specifically limited but preferably 0.001 to 5 parts by weight, more preferably 0.001 to 3 parts by weight, and even more preferably 0.01 to 2 parts by weight, based on 100 parts by weight of the acrylic monomer mixture. The blowing agent-containing acrylic pressure-sensitive adhesive composition a having a content of the polyfunctional (meth)acrylate of more than 5 parts by weight may obtain excessively high cohesive power to reduce flexibility of the blowing agent-containing pressure-sensitive adhesive layer A, and hence the adhesive performance may be reduced. The blowing agent-containing acrylic pressure-sensitive adhesive composition a having a content of the polyfunctional (meth)acrylate of less than 0.001 part by weight may obtain insufficient cohesive power, and hence the polyfunctional (meth)acrylate may not provide the advantages.

The blowing agent-containing pressure-sensitive adhesive composition a is preferably adjusted to have a viscosity suited for coating (commonly, a viscosity of 0.3 to 40 Pa·s determined with a Brookfield viscometer at a measurement temperature of 25°C). On this account, the blowing agent-containing pressure-sensitive adhesive composition a preferably includes a partial polymer that is obtained by prepolymerization of a monomer mixture.

The degree of polymerization of the partial polymer in the acrylic monomer mixture is preferably 2 to 40% by weight and more preferably 5 to 20% by weight, but the degree varies depending on the molecular weight of a partially polymerized moiety. The partial polymerization is performed, for example, by irradiation with active energy rays (in particular, ultraviolet rays) while avoiding the contact with oxygen.

The degree of polymerization of a partial polymer is determined as follows: about 0.5 g of a partial polymer is accurately weighed, and then dried at 130°C for 2 hours; the dried polymer is accurately weighed to give a weight loss [volatile content (unreacted monomer weight)]; and the obtained weight loss is substituted into the following equation to give the degree of polymerization.

$$\text{Degree of polymerization (\%) of partial polymer} = [1 - (\text{weight loss})/(\text{weight of partial polymer before drying})] \times 100$$

The blowing agent-containing pressure-sensitive adhesive composition a may include an additive. Examples of the additive include crosslinking agents such as an isocyanate crosslinking agent and an epoxy crosslinking agent; crosslinking auxiliary agents; tackifiers such as a rosin derivative resin, a polyterpene resin, a petroleum resin, and an oil-soluble phenol resin; plasticizers; fillers; age inhibitors; and surfactants. Further examples include foaming auxiliary agents. These additives are used singly or as a mixture of two or more of them.

A gel content (solvent-insoluble content) in the blowing agent-containing pressure-sensitive adhesive layer A is not necessarily limited, but is preferably 50 to 99% by weight, more preferably 55 to 95% by weight, and even more preferably 60 to 90% by weight. The pressure-sensitive adhesive layer having a gel content of less than 50% by weight may have a reduced elasticity coefficient to interfere with peeling of the blowing agent-containing pressure-sensitive adhesive layer A from the peelable or peel-assisting film layer C or with peeling of the pressure-sensitive adhesive tape from an adherend by expansion or foaming of the blowing agent by heat. The pressure-sensitive adhesive layer having a gel content of more than 99% by weight may have a reduced surface wettability to interfere with adhesion.

The gel content in the blowing agent-containing pressure-sensitive adhesive layer A means the "ratio of solvent-insoluble components" in the adhesive and is the value calculated from the "method of determining gel content in adhesive" below. The solvent-insoluble contents also include components insoluble in a solvent, such as a blowing agent.

(Method of Determining Gel Content in Adhesive)

The gel content in an adhesive is determined as follows. About 1 g of an adhesive is taken and accurately weighed to give the weight of the adhesive before immersion. Next, the adhesive is immersed in about 40 g of ethyl acetate for 7 days. Then, all components insoluble in ethyl acetate are recovered and dried at 130°C for 2 hours to determine the dry weight of the insoluble components. Then, the obtained value is substituted into the following equation to determine the gel content.

$$\text{Solvent-insoluble content (\% by weight) in adhesive} = (\text{dry weight of insoluble components}/\text{weight of adhesive before immersion}) \times 100$$

Furthermore, the thickness of the blowing agent-containing pressure-sensitive adhesive layer A is not necessarily limited, but is preferably 1 to 300 $\mu$m, more preferably 10 to 250 $\mu$m, and even more preferably 20 to 200 $\mu$m from the viewpoints of adhesiveness and debonding performance. When the pressure-sensitive adhesive tape of the present invention includes a plurality of blowing agent-containing pressure-sensitive adhesive layers A, the pressure-sensitive adhesive layers may have the same thickness or different thicknesses. The blowing agent-containing pressure-sensitive adhesive layer A may have a single layer structure or a multilayer structure.

(Micropartile-Containing Viscoelastic Substrate B)

The microparticle-containing viscoelastic substrate B includes at least microparticles and is composed of a viscoelastic material. The microparticle-containing viscoelastic substrate B is preferably composed of microparticles and a base polymer. The microparticle-containing viscoelastic substrate B may be a bubble-bearing microparticle-containing viscoelastic substrate B that contains bubbles in addition to the microparticles.

The microparticle-containing viscoelastic substrate B is formed from a composition containing at least microparticles (microparticle-containing composition b). The microparticle-containing composition b may be in any form, such as an active energy ray curable composition, a thermally curable composition, a solvent composition (solution composition), an emulsion composition, and a hot melt composition. Thus, the microparticle-containing composition b may be a composition including a base polymer as an essential component or a composition including a mixture of monomers that form a base polymer or including a partial polymer thereof as an essential component.

Among them, the microparticle-containing composition b preferably includes at least a monomer mixture or a partial polymer thereof, microparticles, and a polymerization initiator (for example, a photoinitiator and a thermopolymerization initiator) from the viewpoints of workability and environment as well as because a curing reaction by heat or active energy rays can cure the microparticle-containing composition b while mixing the microparticles to form the microparticle-containing viscoelastic substrate B and the microparticle-containing viscoelastic substrate B that stably contains the microparticles can be readily obtained. That is, the microparticle-containing composition b is preferably a thermally curable microparticle-containing polymerizable composition or an active energy ray curable microparticle-containing polymerizable composition. In particular, the microparticle-containing composition b is more preferably an active energy ray curable microparticle-containing polymerizable composition b that includes at least a monomer mixture or a partial polymer thereof, microparticles, and a photoinitiator because such a composition can readily produce a thick microparticle-containing viscoelastic substrate.

Examples of the base polymer constituting the microparticle-containing viscoelastic substrate B include, but are not necessarily limited to, an acrylic polymer, a rubber polymer, a vinyl alkyl ether polymer, a silicone polymer, a polyester polymer, a polyamide polymer, an urethane polymer, a fluorine polymer, and an epoxy polymer. Among them, the acrylic polymer is preferred from the viewpoints of the balance of characteristics and easy polymer design. These base polymers are used singly or as a mixture of two or more of them.

The composition of the base polymer included in the microparticle-containing viscoelastic substrate B may be the same as or similar to the composition of the base polymer included in the blowing agent-containing pressure-sensitive adhesive layer A or the composition of a base polymer included in the pressure-sensitive adhesive layer D described later.

Thus, the microparticle-containing viscoelastic substrate B is preferably a layer formed from a microparticle-containing acrylic composition b, that is, a microparticle-containing acrylic viscoelastic substrate B, and the microparticle-containing viscoelastic substrate B is more preferably a microparticle-containing acrylic viscoelastic substrate B formed by polymerizing and curing a microparticle-containing acrylic polymerizable composition b that includes at least an acrylic monomer mixture or a partial polymer thereof, microparticles, and a photoinitiator.

In particular, the microparticle-containing polymerizable composition b is preferably a microparticle-containing acrylic polymerizable composition b that includes a mixture of acrylic monomers containing an alkyl (meth)acrylate including an alkyl group (straight or branched chain alkyl group) having 2 to 18 carbon atoms or a partial polymer thereof, a photoinitiator, microparticles, and a polyfunctional (meth)acrylate because such a composition provides a layer having an excellent viscoelastic performance. Thus, the microparticle-containing viscoelastic substrate B is preferably a layer formed from the microparticle-containing acrylic polymerizable composition b that includes a mixture of acrylic monomers containing an alkyl (meth)acrylate including an alkyl group (straight or branched chain alkyl group) having 2 to 18 carbon atoms or a partial polymer thereof, a photoinitiator, microparticles, and a polyfunctional (meth)acrylate.

In the microparticle-containing acrylic polymerizable composition b that includes the acrylic monomer mixture or a partial polymer thereof as an essential component, the ratio of the acrylic monomer mixture or a partial polymer thereof is not necessarily limited, but a too small ratio may not achieve sufficient viscoelasticity. Hence, the ratio is preferably 50% by weight or more (for example 50 to 99% by weight) and more preferably 60% by weight or more (for example 60 to 99% by weight) based on the total weight (100% by weight) of the microparticle-containing acrylic polymerizable composition b.

Examples of the alkyl (meth)acrylate including an alkyl group having 2 to 18 carbon atoms include, but are not necessarily limited to, the alkyl (meth)acrylates including an alkyl group having 2 to 18 carbon atoms exemplified in the blowing agent-containing pressure-sensitive adhesive layer A. Such alkyl (meth)acrylates including an alkyl group having 2 to 18 carbon atoms are used singly or as a mixture of two or more of them.

Among them, specifically preferred alkyl (meth)acrylates including an alkyl group having 2 to 18 carbon atoms are alkyl (meth)acrylates including an alkyl group having 4 to 9 carbon atoms, such as 2-ethylhexyl (meth)acrylate, n-butyl (meth)acrylate, n-octyl (meth)acrylate, isooctyl (meth)acrylate, and isononyl (meth)acrylate.

The content of the alkyl (meth)acrylate including an alkyl group having 2 to 18 carbon atoms in the acrylic monomer mixture is not necessarily limited, but such an alkyl (meth)acrylate is preferably contained as an essential component. Hence, the content is preferably 50% by weight or more, more preferably 55% by weight or more, and even more preferably 60% by weight or more, based on the total weight (100% by weight) of monomer components constituting the acrylic monomer mixture.

It is preferable that the acrylic monomer mixture further includes a copolymerizable monomer in addition to the alkyl (meth)acrylate including an alkyl group having 2 to 18 carbon atoms in order to improve cohesive power of the substrate and to improve the viscoelastic characteristics.

Examples of the copolymerizable monomer include, but are not necessarily limited to, the copolymerizable monomers exemplified in the blowing agent-containing pressure-sensitive adhesive layer A. Such copolymerizable monomers are used singly or as a mixture of two or more of them.

Among them, for the copolymerizable monomer, carboxyl group-containing monomers and hydroxy group-containing monomers are preferred, and acrylic acid is more preferred.

When the acrylic monomer mixture contains the copolymerizable monomer, the ratio (based on weight) of the alkyl (meth)acrylate including an alkyl group having 2 to 18 carbon atoms/the copolymerizable monomer is preferably 50/50 to 99/1, more preferably 55/45 to 99/1, and even more preferably 60/40 to 99/1.

Examples of the microparticles contained in the microparticle-containing viscoelastic substrate B include, but are not necessarily limited to, particles of metals such as copper, nickel, aluminum, chromium, iron, and stainless steel, and particles of oxides thereof; particles of carbides such as silicon carbide, boron carbide, and nitrogen carbide; particles of nitrides such as aluminium nitride, silicon nitride, and boron nitride; particles of ceramics typified by oxides such as alumina and zirconia; microparticles of inorganic materials such as calcium carbide, aluminium hydroxide, glass, and silica; naturally-occurring particles such as white sandy loam ("shirasu") and sand; and particles of polymers such as polystyrene, polymethyl methacrylate, a phenol resin, a benzoguanamine resin, an urea resin, a silicon resin, nylon, polyester, polyurethane, polyethylene, polypropylene, polyamide, and polyimide. These microparticles are used singly or as a mixture of two or more of them.

Examples of the microparticles contained in the microparticle-containing viscoelastic substrate B further include hollow inorganic microspheres and hollow organic microspheres. Specifically, examples of the hollow inorganic microspheres include hollow balloons made of glass, such as hollow glass balloons; hollow balloons made of metallic compounds, such as hollow alumina balloons; and hollow balloons made of ceramics, such as hollow ceramic balloons. Examples of the hollow organic microspheres include hollow balloons made of resins, such as hollow acrylic balloons and hollow vinylidene chloride balloons.

The hollow inorganic microspheres and hollow organic microspheres may be commercial products. Examples of the commercially available hollow glass balloons include trade names "Fuji Balloon" and "Glass Microballoon" (manufactured by Fuji Silysia Chemical Ltd.); trade names "CEL-STAR Z-20", "CEL-STAR Z-25", "CEL-STAR Z-27", "CEL-STAR CZ-31T", "CEL-STAR Z-36", "CEL-STAR Z-39", "CEL-STAR T-36", "CEL-STAR SX-39", and "CEL-STAR PZ-6000" (manufactured by TOKAI KOGYO Co., Ltd.); and trade name "Silax Fine Balloon" (manufactured by Fine Balloon Ltd.).

Among the microparticles, from the viewpoints of polymerization efficiency by active energy rays (in particular, ultraviolet rays), weight, and the like, the hollow inorganic microparticles are preferred, and the hollow glass balloons are more preferred. The use of the hollow glass balloons can improve the viscoelastic performance without interfering with other characteristics such as shear force and holding power. The microparticles may be subjected to various surface treatments (for example, a treatment for reducing surface tension with a silicone compound, a fluorine compound, or the like).

The particle diameter (average particle diameter) of the microparticles is not necessarily limited, but is preferably 1 to 500 $\mu$m, more preferably 5 to 200 $\mu$m, even more preferably 10 to 100 $\mu$m, and further preferably 30 to 100 $\mu$m.

The specific gravity (true density) of the microparticles is not necessarily limited, but is preferably 0.01 to 1.8 g/cm$^3$ and more preferably 0.02 to 1.5 g/cm$^3$. Microparticles having a specific gravity of less than 0.01 g/cm$^3$ may increase the uplift during incorporation of the microparticles to interfere with uniform dispersion of the microparticles in a composition, and may have insufficient strength to be broken. Microparticles having a specific gravity of more than 1.8 g/cm$^3$ may reduce the transmittance of active energy rays (in particular, ultraviolet rays) to reduce the efficiency of photo-curing reaction, and may increase the weight of a pressure-sensitive adhesive tape to interfere with workability In particular, hollow inorganic microparticles as the microparticles preferably have a true density of 0.1 to 0.6 g/cm$^3$, and hollow

organic microparticles preferably have a true density of 0.01 to 0.05 g/cm$^3$.

In the microparticle-containing viscoelastic substrate B, the content of the microparticles is not necessarily limited, but is preferably 1 to 20% by weight and more preferably 1 to 15% by weight based on the total weight (100% by weight) of the microparticle-containing viscoelastic substrate B. The microparticle-containing viscoelastic substrate B having a content of the microparticles of less than 1% by weight may not have improved viscoelastic performance. The microparticle-containing viscoelastic substrate B having a content of the microparticles of more than 20% by weight may have impaired strength or viscoelastic performance.

In the microparticle-containing composition b constituting the microparticle-containing viscoelastic substrate B, the content of the microparticles is not particularly limited. For example, the content of the microparticles in the microparticle-containing acrylic polymerizable composition b is preferably 1 to 20 parts by weight and more preferably 1 to 15 parts by weight based on 100 parts by weight of the acrylic monomer mixture.

When the microparticle-containing polymerizable composition b (in particular, the microparticle-containing acrylic polymerizable composition b) constituting the microparticle-containing viscoelastic substrate B contains a polymerization initiator, examples of the polymerization initiator include a photoinitiator and a thermopolymerization initiator. These polymerization initiators are used singly or as a mixture of two or more of them.

Examples of the photoinitiator include, but are not necessarily limited to, the photoinitiators exemplified in the blowing agent-containing pressure-sensitive adhesive layer A. The content of the photoinitiator in the microparticle-containing polymerizable composition b is not particularly limited. For example, the content of the photoinitiator in the microparticle-containing acrylic polymerizable composition b is preferably 0.001 to 5 parts by weight and more preferably 0.05 to 3 parts by weight based on 100 parts by weight of the acrylic monomer mixture.

For the activation of a photoinitiator, active energy rays are applied. Examples of such active energy rays include ionizing radiation beams such as α-rays, β-rays, γ-rays, neutron beams, and electron beams and ultraviolet rays, and among them, the ultraviolet rays are especially preferred. Conditions for the application of active energy rays, such as irradiation energy and irradiation time, are not necessarily limited, and any condition can be employed as long as a photoinitiator is activated to cause the reaction of monomer components.

Examples of the thermopolymerization initiator include, but are not necessarily limited to, the thermopolymerization initiators exemplified in the blowing agent-containing pressure-sensitive adhesive layer A. The content of the thermopolymerization initiator is not necessarily limited and is properly set as long as the effect of the invention is not impaired.

The microparticle-containing acrylic polymerizable composition b preferably includes a polyfunctional (meth)acrylate in order to improve cohesive power of the viscoelastic material by cross-linkages and to further improve viscoelastic performance of the microparticle-containing viscoelastic substrate B. The polyfunctional (meth)acrylate is a compound that has two or more radical polymerizable carbon-carbon double bonds in the molecule. Such polyfunctional (meth)acrylates are used singly or as a mixture of two or more of them.

Examples of the polyfunctional (meth)acrylate include, but are not necessarily limited to, the polyfunctional (meth)acrylates exemplified in the blowing agent-containing pressure-sensitive adhesive layer A.

When the microparticle-containing acrylic polymerizable composition b includes the polyfunctional (meth)acrylate, the specific content of the polyfunctional (meth)acrylate varies depending on the molar weight, the number of functional groups, or the like of the polyfunctional (meth)acrylate. For example, the content is preferably 0.001 to 5 parts by weight, more preferably 0.001 to 3 parts by weight, and even more preferably 0.01 to 2 parts by weight, based on 100 parts by weight of the acrylic monomer mixture. The composition having a content of the polyfunctional (meth)acrylate of more than 5 parts by weight may obtain excessively high cohesive power to reduce the viscoelastic performance of the microparticle-containing viscoelastic substrate B. The composition having a content of the polyfunctional (meth)acrylate of less than 0.001 part by weight may obtain insufficient cohesive power, and hence the polyfunctional (meth)acrylate may not provide the advantages.

The microparticle-containing viscoelastic substrate B preferably includes bubbles in order to improve flexibility of the pressure-sensitive adhesive tape, following performance to an uneven surface, and adhesiveness to an adherend. Thus, the microparticle-containing viscoelastic substrate B is preferably a viscoelastic layer that contains bubbles and microparticles. In the present specification, the microparticle-containing viscoelastic substrate B that contains bubbles and microparticles is also referred to as the "bubble-bearing microparticle-containing viscoelastic substrate B".

Formation of the bubbles in the bubble-bearing microparticle-containing viscoelastic substrate B is not necessarily limited. For example, (1) a microparticle-containing composition b that is previously mixed with a gaseous component to form bubbles (also referred to as "bubble forming gas") (also referred to as "bubble-bearing microparticle-containing composition b") is used to form the microparticle-containing viscoelastic substrate B in which bubbles are formed; or (2) a microparticle-containing composition b that contains a foaming agent is used to form a microparticle-containing viscoelastic substrate in which bubbles are formed. In the bubble-bearing microparticle-containing viscoelastic substrate B, the bubbles are preferably formed by the procedure (1). Examples of the foaming agent include, but are not necessarily limited to, known foaming agents such as heat-expandable microspheres.

In the bubble-bearing microparticle-containing viscoelastic substrate B, the content of the bubbles is not necessarily limited, but is preferably 3 to 30% by volume and more preferably 13 to 22% by volume based on the total volume (100% by volume) of the bubble-bearing microparticle-containing viscoelastic substrate B. A content of the bubbles of less than 3% by volume may not achieve the advantages of the bubbles. A content of the bubbles of more than 30% by volume may form bubbles that penetrate through the substrate to impair the viscoelastic performance or appearance.

The bubbles in the bubble-bearing microparticle-containing viscoelastic substrate B are desirably basically closed cells, but they may be a mixture of closed cells and semi-closed cells. The shape of such bubbles is not necessarily limited, but commonly is spheroidal (in particular, spherical). In the bubbles, the average bubble diameter is not necessarily limited, but is preferably 1 to 1000 $\mu$m, more preferably 10 to 500 $\mu$m, and even more preferably 30 to 300 $\mu$m.

Examples of the bubble forming gas include, but are not necessarily limited to, inert gases such as nitrogen, carbon dioxide, and argon, and various gas components such as air. When a reaction such as polymerization reaction is performed after the incorporation of a bubble forming gas, the bubble forming gas should not interfere with the reaction. As the bubble forming gas, nitrogen is preferred because it does not interfere with a reaction and is low cost.

The microparticle-containing composition b preferably includes a surfactant along with bubbles in order to reduce adhesiveness and frictional resistance between the microparticles and the base polymer in the bubble-bearing microparticle-containing viscoelastic substrate B and to improve incorporation and stability of the bubbles. Examples of the surfactant include a fluorochemical surfactant, a silicone surfactant, a nonionic surfactant, and an ionic surfactant. Among them, the fluorochemical surfactant is particularly preferably exemplified because it has excellent bubble incorporation performance and can suppress coalescence of bubbles. Among the fluorochemical surfactants, preferred is a fluorochemical surfactant having an oxy-$C_{2-3}$ alkylene group and a fluorinated hydrocarbon group in the molecule. Among them, a nonionic surfactant is further preferred from the viewpoint of dispersibility. Such fluorochemical surfactants may be contained singly or as a mixture of two or more of them. Preferred examples of the fluorochemical surfactant include fluorochemical surfactants described in JP-A No. 2008-12798 and JP-A No. 2006-022189.

As the fluorochemical surfactant, commercial products may be used. Examples of such commercial products include trade name "FTERGENT 251" and trade name "FTX-218" (manufactured by Neos Company Ltd.), trade name "MEGAFACE F-477" and trade name "MEGAFACE F -470" (manufactured by DIC Corporation), trade name "Surflons S-381, S-383, S-393, KH-20, and KH-40" (manufactured by AGC SEIMI CHEMICALS Co., Ltd.), trade name "EFTOPs EF-352 and EF-801" (manufactured by Jemco Co., Ltd), and trade name "UNIDYNE TG-656" (manufactured by DAIKIN INDUSTRIES, LTD.).

In the microparticle-containing composition b, the content (solid content) of the fluorochemical surfactant is not necessarily limited, but for example, the content in the microparticle-containing acrylic polymerizable composition b is preferably 0.01 to 2 parts by weight, more preferably 0.03 to 1.5 parts by weight, and even more preferably 0.05 to 1 part by weight, based on 100 parts by weight of an acrylic monomer mixture. A content of less than 0.01 part by weight may reduce the incorporation of bubbles to interfere with the incorporation of a sufficient amount of bubbles. A content of more than 2 parts by weight may reduce the viscoelastic performance.

The microparticle-containing composition b is preferably adjusted to have a viscosity suited for coating (commonly, a viscosity of 0.3 to 40 Pa·s determined with a Brookfield viscometer at a measurement temperature of 25°C) from the viewpoints of easy incorporation of bubbles and easy handling. On this account, the microparticle-containing composition b is preferably a microparticle-containing polymerizable composition b containing a partial polymer that is obtained by prepolymerization of a monomer mixture.

For example, when the microparticle-containing acrylic polymerizable composition b contains a partial polymer of an acrylic monomer mixture, the degree of polymerization of the partial polymer in the acrylic monomer mixture is preferably 2 to 40% by weight and more preferably 5 to 20% by weight, but the degree varies depending on the molecular weight of a partially polymerized moiety. The partial polymerization is performed, for example, by irradiation with active energy rays (in particular, ultraviolet rays) while avoiding the contact with oxygen.

The degree of polymerization of the partial polymer can be determined in a similar manner to that in the blowing agent-containing pressure-sensitive adhesive layer A.

The viscosity of the microparticle-containing composition b may be adjusted by suitable combination of a thickening polymer. Examples of such thickening polymers include acrylic polymers that are obtained by copolymerization of the alkyl (meth)acrylate with acrylic acid, acrylamide, acrylonitrile, acryloylmorpholine, or the like; styrene-butadiene rubber (SBR); isoprene rubber; a styrene-butadiene block copolymer (SBS); an ethylene-vinyl acetate copolymer; acrylic rubber; polyurethane; and polyester. These thickening polymers are used singly or as a mixture of two or more of them.

The amount of the thickening polymer in the microparticle-containing composition b is not necessarily limited, but is preferably 40% by weight or less (for example 5 to 40% by weight) based on the total weight (100% by weight) of the microparticle-containing composition b.

The microparticle-containing composition b may further include an additive. Examples of such additives include crosslinking agents such as an isocyanate crosslinking agent and an epoxy crosslinking agent; crosslinking auxiliary agents; tackifiers such as a rosin derivative resin, a polyterpene resin, a petroleum resin, and an oil-soluble phenol resin; plasticizers; fillers; age inhibitors; and surfactants. These additives are used singly or as a mixture of two or more of them.

The thickness of the microparticle-containing viscoelastic substrate B is not necessarily limited, but is preferably 100 μm or more (for example 100 to 1500 μm), more preferably 150 μm or more (for example 150 to 1400 μm), and even more preferably 200 μm or more (for example 200 μm to 1300 μm), from the viewpoint of viscoelasticity. When the pressure-sensitive adhesive tape of the present invention includes a plurality of microparticle-containing viscoelastic substrates B, the viscoelastic substrates may have the same thickness or different thicknesses. The microparticle-containing viscoelastic substrate B may have a single layer structure or a multilayer structure.

(Peelable or Peel-Assisting Film Layer C)

The peelable or peel-assisting film layer C provides sufficient normal adhesive strength with respect to the blowing agent-containing pressure-sensitive adhesive layer A as well as can be readily peeled from the blowing agent-containing pressure-sensitive adhesive layer A by expansion or foaming of the blowing agent in the blowing agent-containing pressure-sensitive adhesive layer A as a result of heat treatment.

Preferable examples of films constituting such a peelable or peel-assisting film layer C include, but are not necessarily limited to, a plastic film from the viewpoints of the balance of adhesiveness and releasability, and the cost. Further examples include an exothermic film that generates heat by application of electric current.

Examples of resins contained in the plastic film include, but are not necessarily limited to, polyesters such as polyethylene terephthalate; polyolefins such as polyethylene and polypropylene; polyvinyl chloride; polyimide; polyamides such as nylon; rayon; polycarbonate; and ABS. These resins are used singly or as a mixture of two or more of them.

Among them, as the plastic film, a film composed of at least one resin selected from a polycarbonate resin and an ABS resin is preferred. A polycarbonate film and an ABS film are also preferred.

Examples of the exothermic film include, but are not necessarily limited to, a metal foil (metal film), a resin film having a zigzag heating wire inside the film, a resin film including a metal foil inside the film, a graphite carbon film, and a resin film including, for example, a carbon powder or a metal powder inside the film.

For the metal constituting the metal foil and the metal powder, electrically-conductive metals such as aluminum and copper are preferred. For the heating wire, metal wires having a large electric resistance, such as a nichrome wire (nickel-chromium alloy wire) and an iron-chromium alloy wire are preferred.

In the pressure-sensitive adhesive tape of the present invention, when the peelable or peel-assisting film layer C is the exothermic film, a method of generating heat by direct application of electric current or a method of generating heat by high-frequency electromagnetic induction is employed to locally heat the exothermic film alone, and thus the film can be separated or debonded without heating the whole pressure-sensitive adhesive tape. On this account, the pressure-sensitive adhesive tape of the present invention including the exothermic film as the peelable or peel-assisting film layer C can be suitably used for an adherend that is readily degraded by heat or may cause trouble at a high temperature.

The thickness of the peelable or peel-assisting film layer C is not necessarily limited, but is preferably 5 μm to 3000 μm and more preferably 10 μm to 2000 μm.

The peelable or peel-assisting film layer C may have a single layer structure or a multilayer structure. When the pressure-sensitive adhesive tape of the present invention includes two or more peelable or peel-assisting film layers C, the peelable or peel-assisting film layers may have the same thickness or different thicknesses.

The peelable or peel-assisting film layer C is preferably a layer having characteristics that the adhesive strength between the peelable or peel-assisting film layer C and the blowing agent-containing pressure-sensitive adhesive layer A is larger than the adhesive strength of the pressure-sensitive adhesive tape to an adherend in order to sufficiently achieve the tape characteristics (adhesive characteristics) of the pressure-sensitive adhesive tape of the present invention.

(Pressure-Sensitive Adhesive Layer D)

The pressure-sensitive adhesive tape of the present invention includes at least one pressure-sensitive adhesive layer D as the outermost layer to be an adhesive face. The pressure-sensitive adhesive layer D is formed from a pressure-sensitive adhesive composition. In the present specification, the pressure-sensitive adhesive composition constituting the pressure-sensitive adhesive layer D is also referred to as the "pressure-sensitive adhesive composition d".

The pressure-sensitive adhesive composition d may be in any form, such as an active energy ray curable composition, a thermally curable composition, a solvent composition (solution composition), an emulsion composition, and a hot melt composition. That is, the pressure-sensitive adhesive composition d may be a composition including a base polymer as an essential component or a composition including a mixture of acrylic monomers that form a base polymer or a partial polymer thereof as an essential component.

Among them, the pressure-sensitive adhesive composition d preferably includes at least a monomer mixture or a partial polymer thereof and a polymerization initiator (for example, a photoinitiator and a thermopolymerization initiator) from the viewpoints of workability and environment. That is, the pressure-sensitive adhesive composition d is preferably a thermally curable pressure-sensitive adhesive composition or an active energy ray curable pressure-sensitive adhesive composition. In particular, the pressure-sensitive adhesive composition d is preferably the active energy ray curable pressure-sensitive adhesive composition including at least a monomer mixture or a partial polymer thereof and a photoinitiator in order to reduce polymerization time.

Examples of the base polymer of a pressure-sensitive adhesive constituting the pressure-sensitive adhesive layer D include, but are not necessarily limited to, an acrylic polymer, a rubber polymer, a vinyl alkyl ether polymer, a silicone polymer, a polyester polymer, a polyamide polymer, an urethane polymer, a fluorine polymer, and an epoxy polymer. Among them, the acrylic polymer is preferred from the viewpoints of easy design and the balance of characteristics. These base polymers are used singly or as a mixture of two or more of them.

Thus, the pressure-sensitive adhesive layer D is preferably a layer formed from an acrylic pressure-sensitive adhesive composition d, that is, an acrylic pressure-sensitive adhesive layer D, and the pressure-sensitive adhesive layer D is more preferably an acrylic pressure-sensitive adhesive layer D formed by polymerizing and curing an acrylic pressure-sensitive adhesive composition d that includes at least an acrylic monomer mixture or a partial polymer thereof and a photoinitiator.

The composition of the base polymer included in the pressure-sensitive adhesive layer D may be the same as or similar to the composition of the base polymer included in the blowing agent-containing pressure-sensitive adhesive layer A or the composition of the base polymer included in the microparticle-containing viscoelastic substrate B.

In particular, the pressure-sensitive adhesive composition d is preferably an acrylic pressure-sensitive adhesive composition d that contains a mixture of acrylic monomers including an alkyl group (straight or branched chain alkyl group) having 2 to 18 carbon atoms or a partial polymer thereof, a photoinitiator, and a polyfunctional (meth)acrylate because such a composition provides a pressure-sensitive adhesive layer having excellent adhesion characteristics.

In an acrylic polymerizable composition d that includes the acrylic monomer mixture or a partial polymer thereof as an essential component, the ratio of the acrylic monomer mixture or a partial polymer thereof is not necessarily limited, but a too small ratio may not achieve sufficient adhesive characteristics. Hence, the ratio is preferably 80% by weight or more (for example (80 to 99% by weight) and more preferably 90% by weight or more (for example 90 to 99% by weight) based on the total weight (100% by weight) of the acrylic polymerizable composition d.

Examples of the alkyl (meth)acrylate including an alkyl group having 2 to 18 carbon atoms include, but are not necessarily limited to, the alkyl (meth)acrylates including an alkyl group having 2 to 18 carbon atoms exemplified in the blowing agent-containing pressure-sensitive adhesive layer A. Such alkyl (meth)acrylates including an alkyl group having 2 to 18 carbon atoms are used singly or as a mixture of two or more of them.

Among them, specifically preferred are alkyl (meth)acrylates including an alkyl group having 4 to 9 carbon atoms, such as 2-ethylhexyl (meth)acrylate, n-butyl (meth)acrylate, n-octyl (meth)acrylate, isooctyl (meth)acrylate, and isononyl (meth)acrylate.

The content of the alkyl (meth)acrylate including an alkyl group having 2 to 18 carbon atoms in the acrylic monomer mixture is not necessarily limited, but such an alkyl (meth)acrylate is preferably contained as an essential component. Hence, the content is preferably 50% by weight or more, more preferably 55% by weight or more, and even more preferably 60% by weight or more, based on the total weight (100% by weight) of monomer components constituting the acrylic monomer mixture.

It is preferable that the acrylic monomer mixture further includes a copolymerizable monomer in addition to the alkyl (meth)acrylate including an alkyl group having 2 to 18 carbon atoms in order to improve cohesive power of the pressure-sensitive adhesive layer and to improve the adhesion characteristics.

Examples of the copolymerizable monomer include, but are not necessarily limited to, the copolymerizable monomers exemplified in the blowing agent-containing pressure-sensitive adhesive layer A. Such copolymerizable monomers are used singly or as a mixture of two or more of them.

Among them, for the copolymerizable monomer, carboxyl group-containing monomers and hydroxy group-containing monomers are preferred, and acrylic acid is more preferred.

When the acrylic monomer mixture contains the copolymerizable monomer, the ratio (based on weight) of the alkyl (meth)acrylate including an alkyl group having 2 to 18 carbon atoms/the copolymerizable monomer is preferably 50/50 to 99/1, more preferably 55/45 to 99/1, and even more preferably 60/40 to 99/1.

When the pressure-sensitive adhesive composition d contains a polymerization initiator, examples of the polymerization initiator include a photoinitiator and a thermopolymerization initiator. Such polymerization initiators are used singly or as a mixture of two or more of them.

Preferred examples of the photoinitiator include, but are not necessarily limited to, the photoinitiators exemplified in the blowing agent-containing pressure-sensitive adhesive layer A. The content of the photoinitiator in the pressure-sensitive adhesive composition d is not specifically limited. For example, the content of the photoinitiator in the acrylic pressure-sensitive adhesive composition d is preferably 0.001 to 5 parts by weight and more preferably 0.05 to 3 parts by weight based on 100 parts by weight of the acrylic monomer mixture.

For the activation of a photoinitiator, active energy rays are applied. Examples of such active energy rays include ionizing radiation beams such as $\alpha$-rays, $\beta$-rays, $\gamma$-rays, neutron beams, and electron beams and ultraviolet rays, and among them, the ultraviolet rays are especially preferred. Conditions for the application of active energy rays, such as irradiation energy and irradiation time, are not necessarily limited, and any condition can be employed as long as a photoinitiator is activated to cause the reaction of monomer components.

Examples of the thermopolymerization initiator include, but are not necessarily limited to, the thermopolymerization initiators exemplified in the blowing agent-containing pressure-sensitive adhesive layer A. The content of the thermopolymerization initiator is not necessarily limited and is properly set as long as the effect of the invention is not impaired.

The pressure-sensitive adhesive composition d preferably includes a polyfunctional (meth)acrylate in order to improve cohesive power of the pressure-sensitive adhesive layer D by cross-linkages and to improve viscoelastic performance of the pressure-sensitive adhesive layer D. The polyfunctional (meth)acrylate is a compound that has two or more radical polymerizable carbon-carbon double bonds in the molecule. Such polyfunctional (meth)acrylates are used singly or as a mixture of two or more of them.

Examples of the polyfunctional (meth)acrylate include, but are not necessarily limited to, the polyfunctional (meth)acrylates exemplified in the blowing agent-containing pressure-sensitive adhesive layer A.

When the acrylic pressure-sensitive adhesive composition d contains the polyfunctional (meth)acrylate, the specific content of the polyfunctional (meth)acrylate varies depending on the molar weight, the number of functional groups, or the like of the polyfunctional (meth)acrylate. For example, the content is preferably 0.001 to 5 parts by weight, more preferably 0.001 to 3 parts by weight, and even more preferably 0.01 to 2 parts by weight, based on 100 parts by weight of the acrylic monomer mixture. The composition having a content of the polyfunctional (meth)acrylate of more than 5 parts by weight may obtain excessively high cohesive power to reduce the adhesive performance of the pressure-sensitive adhesive layer. The composition having a content of the polyfunctional (meth)acrylate of less than 0.001 part by weight may obtain insufficient cohesive power, and hence the polyfunctional (meth)acrylate may not provide the advantages.

The acrylic pressure-sensitive adhesive composition d is preferably adjusted to have a viscosity suited for coating (commonly, a viscosity of 0.3 to 40 Pa·s determined with a Brookfield viscometer at a measurement temperature of 25°C). On this account, the acrylic pressure-sensitive adhesive composition preferably includes a partial polymer that is obtained by prepolymerization of a monomer mixture.

For example, when the acrylic pressure-sensitive adhesive composition d contains a partial polymer of an acrylic monomer mixture, the degree of polymerization of the partial polymer in the acrylic monomer mixture is preferably 2 to 40% by weight and more preferably 5 to 20% by weight, but the degree varies depending on the molecular weight of a partially polymerized moiety. The partial polymerization is performed, for example, by irradiation with active energy rays (in particular, ultraviolet rays) while avoiding the contact with oxygen.

The degree of polymerization of the partial polymer can be determined in a similar manner to that in the blowing agent-containing pressure-sensitive adhesive layer A.

The pressure-sensitive adhesive composition d may further include microparticles, bubbles, and a blowing agent as necessary. Preferred examples of the microparticles include the microparticles contained in the microparticle-containing viscoelastic substrate B. Preferred examples of the blowing agent include the blowing agents contained in the blowing agent-containing pressure-sensitive adhesive layer A.

The pressure-sensitive adhesive composition d may further include additives including crosslinking agents such as an isocyanate crosslinking agent and an epoxy crosslinking agent; crosslinking auxiliary agents; tackifiers such as a rosin derivative resin, a polyterpene resin, a petroleum resin, and an oil-soluble phenol resin; plasticizers; fillers; age inhibitors; and surfactants as necessary. These additives are used singly or as a mixture of two or more of them.

The thickness of the pressure-sensitive adhesive layer D is not necessarily limited, but is preferably 1 to 300 $\mu$m, more preferably 10 to 250 $\mu$m, and even more preferably 20 to 200 $\mu$m from the viewpoint of adhesiveness. When the pressure-sensitive adhesive tape of the present invention includes a plurality of pressure-sensitive adhesive layers D, the pressure-sensitive adhesive layers D may have the same thickness or different thicknesses. The pressure-sensitive adhesive layer D may have a single layer structure or a multilayer structure.

(Other Layers)

The pressure-sensitive adhesive tape of the present invention may include other layers (for example, an intermediate layer and an under coat) as long as the effect of the invention is not impaired.

An exothermic layer is further exemplified as the other layer. If the pressure-sensitive adhesive tape of the present invention has the exothermic layer, the exothermic layer can generate heat to expand a blowing agent for removing the tape from an adherend, and the adhesive strength to the adherend can be readily reduced. Hence, the separation and debonding readily proceed at an interface between the blowing agent-containing pressure-sensitive adhesive layer A and the peelable or peel-assisting film layer C.

When the pressure-sensitive adhesive tape of the present invention includes the exothermic layer, the position of the exothermic layer in the whole pressure-sensitive adhesive tape is not specifically limited.

Preferred examples of the exothermic layer include layers composed of the exothermic films exemplified in the peelable or peel-assisting film layer C.

The thickness of the exothermic layer is not necessarily limited, but is preferably 10 to 300 $\mu$m and more preferably 30 to 150 $\mu$m.

The adhesive face of the pressure-sensitive adhesive tape of the present invention may be protected by a separator (release liner). Examples of the separator include, but are not necessarily limited to, known separators, and preferably exemplified is a separator having a release layer on at least one side of a separator substrate.

Examples of the separator substrate include, but are not necessarily limited to, a plastic film, paper, a foam, and a metal foil. Among them, for the release liner substrate, a plastic film is preferred. The thickness of the release liner substrate is not specifically limited and properly set depending on a purpose. Examples of materials of the plastic film as the release liner substrate include polyesters such as polyethylene terephthalate; polyolefins such as polypropylene and an ethylene-propylene copolymer; and thermoplastic resins such as polyvinyl chloride. The plastic film may be a non-stretched film or a stretched (monoaxial stretched or biaxial stretched) film.

Examples of the release layer formed on the separator substrate include, but are not necessarily limited to, a release layer formed from a silicone release agent, a release layer formed from a fluorine release agent, and a release layer formed from a long-chain alkyl release agent. The release layer may be formed on one side of the separator substrate or on both sides of the separator substrate.

The structure of the pressure-sensitive adhesive tape of the present invention is not particularly limited as long as it includes at least the blowing agent-containing pressure-sensitive adhesive layer A, the microparticle-containing viscoelastic substrate B, the peelable or peel-assisting film layer C, and the pressure-sensitive adhesive layer D, a multilayer structure containing at least the peelable or peel-assisting film layer C and the pressure-sensitive adhesive layer D is arranged on at least one side of the blowing agent-containing pressure-sensitive adhesive layer, and the blowing agent-containing pressure-sensitive adhesive layer A is in direct contact with the peelable or peel-assisting film layer C. The pressure-sensitive adhesive tape of the present invention may include one blowing agent-containing pressure-sensitive adhesive layer A or two or more blowing agent-containing pressure-sensitive adhesive layers A. The pressure-sensitive adhesive tape of the present invention may include one microparticle-containing viscoelastic substrate B or two or more microparticle-containing viscoelastic substrates B. The pressure-sensitive adhesive tape of the present invention may include one peelable or peel-assisting film layer C or two or more peelable or peel-assisting film layers C. The pressure-sensitive adhesive tape of the present invention may include one pressure-sensitive adhesive layer D or two or more pressure-sensitive adhesive layers D.

When the pressure-sensitive adhesive tape of the present invention includes two or more blowing agent-containing pressure-sensitive adhesive layers A, the pressure-sensitive adhesive layers may have the same composition or different compositions. When the pressure-sensitive adhesive tape includes two or more microparticle-containing viscoelastic substrates, the viscoelastic substrates may have the same composition or different compositions. When the pressure-sensitive adhesive tape includes two or more peelable or peel-assisting film layers C, the peelable or peel-assisting film layers may have the same composition or different compositions. When the pressure-sensitive adhesive tape includes two or more pressure-sensitive adhesive layers D, the pressure-sensitive adhesive layers may have the same composition or different compositions.

In particular, the pressure-sensitive adhesive tape of the present invention preferably includes one blowing agent-containing pressure-sensitive adhesive layer A, one microparticle-containing viscoelastic substrate B, one peelable or peel-assisting film layer C, and one pressure-sensitive adhesive layer D.

In the pressure-sensitive adhesive tape of the present invention, the position of the blowing agent-containing pressure-sensitive adhesive layer A is not particularly limited as long as the blowing agent-containing pressure-sensitive adhesive layer A is in direct contact with the peelable or peel-assisting film layer C, and the position may be the outermost layer or an intermediate layer.

The microparticle-containing viscoelastic substrate B is a viscoelastic body and hence provides tackiness. On this account, in the pressure-sensitive adhesive tape of the present invention, the microparticle-containing viscoelastic substrate B may be present as the outermost layer to serve an adhesive face. The microparticle-containing viscoelastic substrate B may be a pressure-sensitive adhesive layer (adhesive layer) containing microparticles.

Examples of the multilayer structure containing at least the peelable or peel-assisting film layer C and the pressure-sensitive adhesive layer D include, but are not necessarily limited to, a multilayer structure of the pressure-sensitive adhesive layer D and the peelable or peel-assisting film layer C, a multilayer structure of the pressure-sensitive adhesive layer D, the microparticle-containing viscoelastic substrate B, and the peelable or peel-assisting film layer C that are stacked in this order, and a multilayer structure of the pressure-sensitive adhesive layer D, the other layer (for example, an exothermic layer or an under coat), and the peelable or peel-assisting film layer C that are stacked in this order. Among them, the multilayer structure containing at least the peelable or peel-assisting film layer C and the pressure-sensitive adhesive layer D is preferably the multilayer structure of the pressure-sensitive adhesive layer D and the peelable or peel-assisting film layer C in order to achieve good adhesiveness to an adherend.

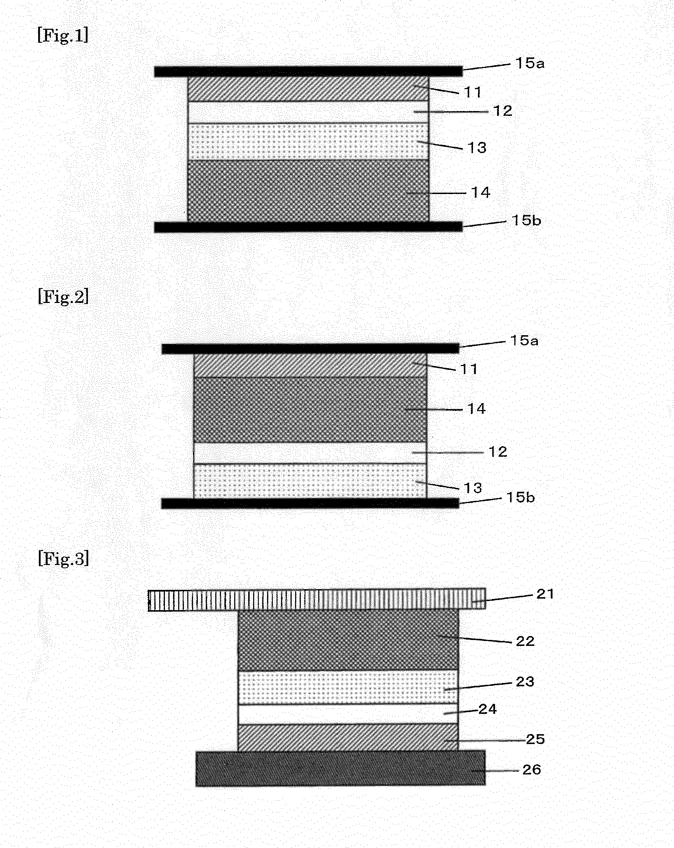

Preferred examples of the pressure-sensitive adhesive tape of the present invention include a pressure-sensitive adhesive tape in Fig. 1 and a pressure-sensitive adhesive tape in Fig. 2, and more preferred examples include the pressure-sensitive adhesive tape in Fig. 1. In Fig. 1 and Fig. 2, 11 is a pressure-sensitive adhesive layer D, 12 is a peelable or peel-assisting film layer C, 13 is a blowing agent-containing pressure-sensitive adhesive layer A, 14 is a microparticle-containing viscoelastic substrate B, 15a is a separator, and 15b is a separator. Each pressure-sensitive adhesive tape in Fig. 1 and Fig. 2 is composed of the pressure-sensitive adhesive layer D 11, the peelable or peel-assisting film layer C12, the blowing agent-containing pressure-sensitive adhesive layer A13, and the microparticle-containing viscoelastic substrate B14. In each pressure-sensitive adhesive tape in Fig. 1 and Fig. 2, the peelable or peel-assisting film layer C is in direct contact with the blowing agent-containing pressure-sensitive adhesive layer A. Each pressure-sensitive adhesive tape in Fig. 1 and Fig. 2 has both sides protected by separators.

The pressure-sensitive adhesive tape in Fig. 1 is composed of the pressure-sensitive adhesive layer D11, the peelable or peel-assisting film layer C12, the blowing agent-containing pressure-sensitive adhesive layer A13, and the microparticle-containing viscoelastic substrate B14 that are stacked in this order from the separator 15a side to the separator 15b side. In the pressure-sensitive adhesive tape in Fig. 1, on at least one side of the blowing agent-containing pressure-sensitive adhesive layer A13, the peelable or peel-assisting film layer C12 is not stacked on the microparticle-containing viscoelastic substrate B14.

The pressure-sensitive adhesive tape in Fig. 2 is composed of the pressure-sensitive adhesive layer D11, the microparticle-containing viscoelastic substrate B14, the peelable or peel-assisting film layer C12, and the blowing agent-containing pressure-sensitive adhesive layer A13 that are stacked in this order from the separator 15a side to the separator 15b side. In the pressure-sensitive adhesive tape in Fig. 2, on at least one side of the blowing agent-containing pressure-sensitive adhesive layer A13, the peelable or peel-assisting film layer C12 is stacked on the microparticle-containing viscoelastic substrate B14.

The method of producing the pressure-sensitive adhesive tape of the present invention is not particularly limited but preferably includes a process of arranging the multilayer structure containing at least the peelable or peel-assisting film layer C and the pressure-sensitive adhesive layer D on at least one side of the blowing agent-containing pressure-sensitive adhesive layer A while the blowing agent-containing pressure-sensitive adhesive layer A is in direct contact with the peelable or peel-assisting film layer C.

For example, the pressure-sensitive adhesive tape (the pressure-sensitive adhesive tape in Fig. 1) composed of the pressure-sensitive adhesive layer D11, the peelable or peel-assisting film layer C12, the blowing agent-containing pressure-sensitive adhesive layer A13, and the microparticle-containing viscoelastic substrate B14 that are stacked in this order is produced by laminating a laminate that is obtained by forming the peelable or peel-assisting film layer C12 on the pressure-sensitive adhesive layer D11 formed on the separator 15a to a laminate that is obtained by forming the multilayer structure including the blowing agent-containing pressure-sensitive adhesive layer A13 and the microparticle-containing viscoelastic substrate B14 on the separator 15b, while the peelable or peel-assisting film layer C12 is in direct contact with the blowing agent-containing pressure-sensitive adhesive layer A13. The pressure-sensitive adhesive tape (the pressure-sensitive adhesive tape in Fig. 2) composed of the pressure-sensitive adhesive layer D11, the microparticle-containing viscoelastic substrate B14, the peelable or peel-assisting film layer C12, and the blowing agent-containing pressure-sensitive adhesive layer A13 that are stacked in this order is produced by laminating a laminate obtained by forming the peelable or peel-assisting film layer C12 on the microparticle-containing viscoelastic substrate B14 in a multilayer structure that is composed of the pressure-sensitive adhesive layer D11 and the microparticle-containing viscoelastic substrate B14 and that is formed on the separator 15a, to the blowing agent-containing pressure-sensitive adhesive layer A13 formed on the separator15b while the peelable or peel-assisting film layer C12 is in direct contact with the blowing agent-containing pressure-sensitive adhesive layer A13.

In the production method, when a layer selected from the pressure-sensitive adhesive layer D11, the blowing agent-containing pressure-sensitive adhesive layer A13, and the microparticle-containing viscoelastic substrate B14 is formed on the separator, it is preferable that a composition (for example, the pressure-sensitive adhesive composition d, the blowing agent-containing pressure-sensitive adhesive composition a, and the microparticle-containing polymerizable composition b) constituting the layer is applied to the separator to form a coated layer and then the coated layer is cured to form an objective layer on the separator.

When a multilayer structure such as the multilayer structure composed of the blowing agent-containing pressure-sensitive adhesive layer A13 and the microparticle-containing viscoelastic substrate B14 and the multilayer structure composed of the pressure-sensitive adhesive layer D11 and the microparticle-containing viscoelastic substrate 14 is formed on a separator, the multilayer structure may be formed by a method of bonding sheets each having an objective layer on the separator, or the multilayer structure may be formed by a method of bonding sheets each obtained by applying a composition (for example, the pressure-sensitive adhesive composition d, the blowing agent-containing pressure-sensitive adhesive composition a, and the microparticle-containing polymerizable composition b) constituting a layer on separators while the coated layers are in contact with each other and simultaneously curing each coated layer.

In the production method, examples of the coating method used for applying a composition to form the layer include, but are not necessarily limited to, slot die coating, reverse gravure coating, micro gravure coating, dipping, spin coating, brush application, roll coating, and flexographic printing. The coating may employ a coating device such as a roll coater including a reverse coater and a gravure coater; a curtain coater; a lip coater; a die coater; and a knife coater.

In the production method, for the curing of the coated layer including a composition to form the layer, photo-curing by active energy rays is preferably employed. Examples of the active energy rays include, but are not necessarily limited to, ionizing radiation beams such as $\alpha$-rays, ß-rays, $\gamma$-rays, neutron beams, and electron beams and ultraviolet rays, and among them, the ultraviolet rays are especially preferred. The irradiation method of active energy rays and the illumination intensity, light quantity, and the like of active energy rays are not particularly limited and properly set.

Preferred examples of the irradiation condition of active energy rays include an irradiation of ultraviolet rays having an illumination intensity of 1 to 200 W/cm$^2$ at a wavelength of 300 to 400 nm in a light quantity of 400 to 4000 mJ/cm$^2$. A light source used for the irradiation of ultraviolet rays is not particularly limited as long as it has a spectrum distribution in a wavelength region of 180 to 460 nm (preferably 300 to 400 nm). Examples of the light source include common irradiation devices such as a chemical lamp, a black light (for example, black light manufactured by TOSHIBA LIGHTING & TECHNOLOGY CORPORATION), a mercury arc lamp, a carbon arc lamp, a low-pressure mercury lamp, a medium-pressure mercury lamp, a high-pressure mercury lamp, an ultrahigh-pressure mercury lamp, and a metal halide lamp. Other examples include an irradiation device that can generate an electromagnetic radiation having a wavelength longer or shorter than the above wavelengths.

The production method may further include a heat drying process as necessary. The heat drying process may be included, for example, in order to increase the degree of polymerization or to remove unreacted monomer components.

In the pressure-sensitive adhesive tape of the present invention, that "the peelable or peel-assisting film layer C is optionally removed from the blowing agent-containing pressure-sensitive adhesive layer A by heat treatment after storage in an atmosphere of 75°C for 8 weeks " means that "the adhesive strength (a pulling rate of 300 mm/min, a peeling angle of 180°, at 23°C) after heat treatment between the peelable or peel-assisting film layer C and the blowing agent-containing pressure-sensitive adhesive layer A is less than 2.0 N/15 mm after storage in an atmosphere of 75°C for 8 weeks". The condition for the heat treatment is set at a temperature ranging from 80 to 170°C (preferably 90 to 170°C, more preferably 100 to 170°C, and most preferably 150 to 170°C) and for a period ranging from 1 minute to 15 minutes. The tape can be peeled in any condition among the conditions above.

That is, in the pressure-sensitive adhesive tape of the present invention, the adhesive strength (a pulling rate of 300 mm/min, a peeling angle of 180°, at 23°C) after the heat treatment between the peelable or peel-assisting film layer C and the blowing agent-containing pressure-sensitive adhesive layer A is less than 2.0 N/15 mm, preferably less than 0.5 N/15 mm, and even more preferably 0 N/15 mm after storage in an atmosphere of 75°C for 8 weeks. The pressure-sensitive adhesive tape having an adhesive strength of more than 2.0 N/15 mm may not cause peeling between the peelable or peel-assisting film layer C and the blowing agent-containing pressure-sensitive adhesive layer A by expansion or foaming of the blowing agent in the blowing agent-containing pressure-sensitive adhesive layer A after storage for a long time even when the pressure-sensitive adhesive tape is heat-treated, and thus the pressure-sensitive adhesive tape may have reduced debonding performance and separation performance.

In the pressure-sensitive adhesive tape of the present invention, though not critical, for example, the peelable or peel-assisting film layer C composed of a particular film leads to peeling of the peelable or peel-assisting film layer C from the blowing agent-containing pressure-sensitive adhesive layer A by heat treatment after storage in an atmosphere of 75°C for 8 weeks. That is, the pressure-sensitive adhesive tape can have an adhesive strength (a pulling rate of 300 mm/min, a peeling angle of 180°, at 23°C) after the heat treatment between the peelable or peel-assisting film layer C and the blowing agent-containing pressure-sensitive adhesive layer A of less than 2.0 N/15 mm after storage in an atmosphere of 75°C for 8 weeks.

In the pressure-sensitive adhesive tape of the present invention, the adhesive strength (a pulling rate of 300 mm/min, a peeling angle of 180°, at 23°C) between the peelable or peel-assisting film layer C and the blowing agent-containing pressure-sensitive adhesive layer A is preferably 2.5 N/15 mm or more and more preferably 5.0 N/15 mm or more. The pressure-sensitive adhesive tape having an adhesive strength of less than 2.5 N/15 mm may lead to peeling between the peelable or peel-assisting film layer C and the blowing agent-containing pressure-sensitive adhesive layer A during the use or storage of the pressure-sensitive adhesive tape, and the tape may not be used as a pressure-sensitive adhesive tape.

The thickness of the pressure-sensitive adhesive tape of the present invention is not necessarily limited, but is preferably 200 $\mu$m to 3 mm and more preferably 300 $\mu$m to 2 mm. The thickness of the pressure-sensitive adhesive tape does not include the thickness of the separator.

The pressure-sensitive adhesive tape of the present invention has excellent normal adhesive strength to an adherend because it has the pressure-sensitive adhesive layer D or the blowing agent-containing pressure-sensitive adhesive layer A as the outermost layer. It also has excellent normal adhesive strength to an adherend even after storage for a long time and can maintain the adhesion characteristics to an adherend even when it is used for a long time. The pressure-sensitive adhesive tape of the present invention has excellent uneven surface following performance or level difference absorbing performance because it includes the microparticle-containing viscoelastic substrate B. In particular, the pressure-sensitive adhesive tape including the bubble-bearing microparticle-containing viscoelastic substrate B as the microparticle-containing viscoelastic substrate B has more excellent normal adhesive strength to an adherend as well as more excellent uneven surface following performance or level difference absorbing performance. The microparticle-containing viscoelastic substrate B has good elasticity coefficient and shows good characteristics in strength and workability because it contains microparticles. In this manner, the pressure-sensitive adhesive tape of the present invention has excellent tape characteristics.

The pressure-sensitive adhesive tape of the present invention causes expansion and/or foaming of the blowing agent in the blowing agent-containing pressure-sensitive adhesive layer A by heat treatment, and the blowing agent-containing pressure-sensitive adhesive layer A is expanded and deformed. Then, the contact area between the blowing agent-containing pressure-sensitive adhesive layer A and the peelable or peel-assisting film layer C is reduced, and the contact area between the pressure-sensitive adhesive tape and an adherend is reduced. On this account, heat treatment of the pressure-sensitive adhesive tape of the present invention reduces the adhesive strength between the blowing agent-containing pressure-sensitive adhesive layer A and the peelable or peel-assisting film layer C and further reduces the adhesive strength to an adherend. Hence, the pressure-sensitive adhesive tape of the present invention has separation or debonding characteristics such as characteristics of peeling at the interface between an adherend and the pressure-sensitive adhesive tape or the interface between the peelable or peel-assisting film layer C and the blowing agent-containing pressure-sensitive adhesive layer A. In the pressure-sensitive adhesive tape of the present invention, stress caused by expansion and deformation of the blowing agent-containing pressure-sensitive adhesive layer A by heat is dispersed without concentration because the pressure-sensitive adhesive tape includes the microparticle-containing viscoelastic substrate B. This is also effective on the characteristics of separation or debonding in the pressure-sensitive adhesive tape of the present invention. The pressure-sensitive adhesive tape of the present invention has excellent separation or debonding characteristics even after storage or use for a long time because the adhesive strength (a pulling rate of 300 mm/min, a peeling angle of 180°) after heat treatment between the peelable or peel-assisting film layer C and the blowing agent-containing pressure-sensitive adhesive layer A is less than 2.0 N/15 mm after storage in an atmosphere of 75°C for 8 weeks.

In this manner, the pressure-sensitive adhesive tape of the present invention has characteristics of separation or debonding and readily peeling from an adherend by heating while achieving good adhesiveness to an adherend. The pressure-sensitive adhesive tape has the characteristics even after storage for a long time, and such characteristics can be maintained even when it is used for a long time.

Examples of an adherend to which the pressure-sensitive adhesive tape of the present invention is used include, but are not necessarily limited to, adherends that have a proper shape or are made of proper materials. The pressure-sensitive adhesive tape of the present invention can be applied to adherends having various shapes such as a smooth face, a curved face, and an uneven face because it has excellent uneven surface following performance and level difference absorbing performance. Examples of the material of an adherend include, but are not necessarily limited to, resins and metals. Examples of the resin include, but are not necessarily limited to, polycarbonate, polypropylene, polyester, polystyrene, a phenol resin, an epoxy resin, polyurethane, ABS, and an acrylic resin. Examples of the metal include iron, aluminum, copper, nickel, and alloys.

The pressure-sensitive adhesive tape of the present invention can be used for various applications (in particular, bonding applications and fixing applications) in various fields such as automobiles, machine parts, electrical appliances, and construction materials.

(Method of Removing Heat-Expandable Removable Pressure-Sensitive Adhesive Tape)

In the method of removing the heat-expandable removable pressure-sensitive adhesive tape of the present invention, the pressure-sensitive adhesive tape of the present invention is heated to reduce the adhesive strength between the peelable or peel-assisting film layer C and the blowing agent-containing pressure-sensitive adhesive layer A for removing. The heat treatment leads to the separation or debonding between the peelable or peel-assisting film layer C and the blowing agent-containing pressure-sensitive adhesive layer A in the pressure-sensitive adhesive tape.

The heat treatment is not particularly limited, but is performed by using proper heating means such as a hot plate, a hot-air drier, a near-infrared lamp, and an air drier. The heating temperature is not particularly limited as long as it is a temperature higher than the expansion or foaming start temperature of a blowing agent, but is properly set depending on, for example, a surface condition of an adherend, a blowing agent type, heat resistance of an adherend, and heating method (for example, heat capacity and heating means). Specifically, the heat treatment is performed by heating, for example, at a temperature of 80 to 170°C with a hot plate for 1 to 15 minutes or with a hot-air drier for 1 to 15 minutes. The heat treatment at a high temperature may lead to a large effect on an adherend, for example, to deform a resin adherend.

The heat treatment may employ heated water as the heating means. When the pressure-sensitive adhesive tape includes an exothermic film as a film constituting the peelable or peel-assisting film layer C or includes the exothermic layer as an other layer, the exothermic layer may be heated by the application of electric current or the like.

**Examples**

Hereinafter, the present invention will be described in detail based on examples, but the present invention is not intended to be limited to the examples.

(Preparation Example 1 of Blowing Agent-Containing Pressure -Sensitive Adhesive Composition)

Into a 4-necked flask, 90 parts by weight of 2-ethylhexyl acrylate, 10 parts by weight of acrylic acid, 0.05 part by weight of a photoinitiator (trade name "Irgacure 184", manufactured by BASF Japan Ltd.), and 0.05 part by weight of a photoinitiator (trade name "Irgacure 651", manufactured by BASF Japan Ltd.) were poured, and the whole was exposed to ultraviolet rays under a nitrogen atmosphere for photopolymerization to give a partially polymerized monomer syrup having a degree of polymerization of 7%.
To 100 parts by weight of the partially polymerized monomer syrup, 30 parts by weight of a blowing agent (heat-expandable microspheres, trade name "Matsumoto Microsphere F-80SD", manufactured by Matsumoto Yushi-Seiyaku Co., Ltd.) and 0.2 part by weight of trimethylolpropane triacrylate were added, and the whole was homogeneously mixed to give a blowing agent-containing pressure-sensitive adhesive composition (also referred to as "blowing agent-containing pressure-sensitive adhesive composition (A)").

(Preparation Example 1 of Bubble-Bearing Microparticle-Containing Polymerizable Composition)

Into a 4-necked flask, 90 parts by weight of 2-ethylhexyl acrylate, 10 parts by weight of acrylic acid, 0.05 part by weight of a photoinitiator (trade name "Irgacure 184", manufactured by BASF Japan Ltd.), and 0.05 part by weight of a photoinitiator (trade name "Irgacure 651", manufactured by BASF Japan Ltd.) were poured, and the whole was exposed to ultraviolet rays under a nitrogen atmosphere for photopolymerization to give a partially polymerized monomer syrup having a degree of polymerization of 7%.
To 100 parts by weight of the partially polymerized monomer syrup, 0.08 part by weight of 1,6-hexanediol diacrylate, 9.5 parts by weight of hollow glass beads (trade name "CEL-STAR Z-27" manufactured by TOKAI KOGYO Co., Ltd., an average particle diameter of 63 $\mu$m, a true density of 0.26 g/cm$^3$), and 0.5 part by weight of a fluorochemical surfactant (trade name "Surflon S-393", manufactured by AGC SEIMI CHEMICALS Co., Ltd.) were added, and the whole was homogeneously mixed using a propeller mixer. Then, the mixture was placed into a beaker, and nitrogen gas was bubbled from the bottom. The bubbles were incorporated into the mixture using a Homo-mixer so as to take the bubbles in the mixture to give a bubble-bearing microparticle-containing polymerizable composition (also referred to as "bubble-bearing microparticle-containing polymerizable composition (A)").

(Preparation Example 1 of Pressure-Sensitive Adhesive Composition)

Into a 4-necked flask, 90 parts by weight of 2-ethylhexyl acrylate, 10 parts by weight of acrylic acid, 0.05 part by weight of a photoinitiator (trade name "Irgacure 184", manufactured by BASF Japan Ltd.), and 0.05 part by weight of a photoinitiator (trade name "Irgacure 651", manufactured by BASF Japan Ltd.) were poured, and the whole was exposed to ultraviolet rays under a nitrogen atmosphere for photopolymerization to give a partially polymerized monomer syrup having a degree of polymerization of 7%.
To 100 parts by weight of the partially polymerized monomer syrup, 0.2 part by weight of trimethylolpropane triacrylate were added, and the whole was homogeneously mixed to give a pressure-sensitive adhesive composition (also referred to as "pressure-sensitive adhesive composition (A)").

(Example 1 of Process Separator to be Used)

A polyester film (trade name "MRN-38", manufactured by Mitsubishi Plastics, Inc.) having one side that was treated with a silicone release agent was used as a process separator (also referred to as "process separator (A)").

(Example 2 of Process Separator to be Used)

A polyester film (trade name "MRF-38", manufactured by Mitsubishi Plastics, Inc.) having one side that was treated with a silicone release agent was used as a process separator (also referred to as "process separator (B)").

(Example 1 of Peelable or Peel-Assisting Film to be Used)

A polycarbonate film (trade name "G2G0G3DWN", manufactured by Mondi Release Liner Austria, a thickness of 30 $\mu$m) was used as a peelable or peel-assisting film (also referred to as "peelable or peel-assisting film (A)").

(Example 2 of Peelable or Peel-Assisting Film to be Used)

An ABS film (manufactured by Eriks, a thickness of 1 mm) was used as a peelable or peel-assisting film (also referred to as "peelable or peel-assisting film (B)").

(Example 3 of Peelable or Peel-Assisting Film to be Used)

A polyester film (trade name "LUMIRROR S-10", a thickness of 12 $\mu$m, manufactured by Toray Industries Inc.) was used as a peelable or peel-assisting film (also referred to as "peelable or peel-assisting film (C)").

(Preparation Example 1 of Pressure-Sensitive Adhesive Layer)

The pressure-sensitive adhesive composition (A) was applied onto the release treated face of the process separator (B) so as to have a thickness after curing of 50 $\mu$m to form a pressure-sensitive adhesive composition layer. Onto the pressure-sensitive adhesive composition layer, the other process separator (B) was bonded so as to be in contact with the release treated face to give a sheet having a multilayer structure of the process separator (B)/the pressure-sensitive adhesive composition layer/the process separator (B).
Ultraviolet rays (UV) having a maximum sensitivity at 350 nm were applied to both sides of the sheet using a black light lamp (manufactured by Toshiba Corporation) at an illumination intensity of 5 mW/cm$^2$ for 240 seconds to give a sheet including a pressure-sensitive adhesive layer having a thickness of 50 $\mu$m (also referred to as "pressure-sensitive adhesive layer sheet (A)").

(Preparation Example 1 of Multilayer Structure Including Bubble-Bearing Microparticle-Containing Viscoelastic Substrate and Blowing Agent-Containing Pressure-Sensitive Adhesive Layer)

The blowing agent-containing pressure-sensitive adhesive composition (A) was applied onto the release treated face of the process separator (B) so as to have a thickness after curing of 100 $\mu$m to give a blowing agent-containing pressure-sensitive adhesive composition layer sheet having a blowing agent-containing pressure-sensitive adhesive composition layer on the process separator (B).
The bubble-bearing microparticle-containing polymerizable composition (A) was applied onto the release treated face of the process separator (A) so as to have a thickness after curing of 100 $\mu$m to give a bubble-bearing microparticle-containing polymerizable composition layer sheet having a bubble-bearing microparticle-containing polymerizable composition layer on the process separator (A).
Next, the blowing agent-containing pressure-sensitive adhesive composition layer sheet was bonded to the bubble-bearing microparticle-containing polymerizable composition layer sheet so that the blowing agent-containing pressure-sensitive adhesive composition layer would be in contact with the bubble-bearing microparticle-containing polymerizable composition layer to make a laminated sheet.
Next, ultraviolet rays (UV) having a maximum sensitivity at 350 nm were applied to both sides of the laminated sheet using a black light lamp (manufactured by Toshiba Corporation) at an illumination intensity of 5 mW/cm$^2$ for 240 seconds to photocure the blowing agent-containing pressure-sensitive adhesive composition layer and the bubble-bearing microparticle-containing polymerizable composition layer, and a sheet having a multilayer structure including the bubble-bearing microparticle-containing viscoelastic substrate and the blowing agent containing pressure-sensitive adhesive layer was obtained.
The blowing agent containing pressure-sensitive adhesive layer had a gel content of 82% by weight.

(Example 1)

To one side of the peelable or peel-assisting film (A), the pressure-sensitive adhesive layer sheet (A) having the pressure-sensitive adhesive layer exposed by removing one of the process separators (B) was bonded under the condition below to give a pressure-sensitive adhesive single-coated tape having a multilayer structure of the process separator (B)/the pressure-sensitive adhesive layer/the peelable or peel-assisting film (A).

Next, to the peelable or peel-assisting film (A) side in the pressure-sensitive adhesive single-coated tape, the sheet that had the multilayer structure of the bubble-bearing microparticle-containing viscoelastic substrate and the blowing agent containing pressure-sensitive adhesive layer and in which the blowing agent-containing pressure-sensitive adhesive layer was exposed by removing the process separator (B) was bonded under the condition below to give a pressure-sensitive adhesive tape having a multilayer structure of the process separator (B)/the pressure-sensitive adhesive layer/the peelable or peel-assisting film (A)/the blowing agent-containing pressure-sensitive adhesive layer/the bubble-bearing microparticle-containing viscoelastic substrate/the process separator (A).

Bonding Condition

Temperature: 23°C
Pressure bonding condition: one reciprocal movement of a 2-kg roller

(Example 2)

Apressure-sensitive adhesive tape having a multilayer structure of the process separator (B)/the pressure-sensitive adhesive layer/the peelable or peel-assisting film (B)/the blowing agent-containing pressure-sensitive adhesive layer/the bubble-bearing microparticle-containing viscoelastic substrate/the process separator (A) was obtained in the same manner as in Example 1 except that the peelable or peel-assisting film (B) was used in place of the peelable or peel-assisting film (A).

(Comparative Example 1)

Apressure-sensitive adhesive tape having a multilayer structure of the process separator (B)/the pressure-sensitive adhesive layer/the peelable or peel-assisting film (C)/the blowing agent-containing pressure-sensitive adhesive layer/the bubble-bearing microparticle-containing viscoelastic substrate/the process separator (A) was obtained in the same manner as in Example 1 except that the peelable or peel-assisting film (C) was used in place of the peelable or peel-assisting film (A).

(Evaluation)

Using the pressure-sensitive adhesive tapes in Examples and Comparative Example at the initial state and after the storage in a temperature environment of 75°C for 8 weeks, each adhesive strength between the blowing agent-containing pressure-sensitive adhesive layer and the peelable or peel-assisting film was determined by the method below (measurement method of adhesive strength between blowing agent-containing pressure-sensitive adhesive layer and peelable or peel-assisting film) for evaluation. The results are shown in Table 1.

(Test Sample)

To the bubble-bearing microparticle-containing viscoelastic substrate exposed by removing the process separator (A) of the pressure-sensitive adhesive tape, a liner substrate (polyester film, trade name "LUMIRROR S-10", a thickness of 25 μm, manufactured by Toray Industries Inc.) was bonded and cut to a width of 15 mm. Next, the process separator (B) was removed to expose the pressure-sensitive adhesive layer, and the pressure-sensitive adhesive layer was bonded to a solid plate for measurement (stainless steel plate, SUS304BA plate) to give a test sample. Fig. 3 shows a schematic cross-sectional view of the test sample.

(Test Sample at Initial State)

The test sample was aged in a temperature environment of 23°C for 30 minutes to prepare a test sample at the initial state.

(Test Sample after Storage)

The test sample was stored in a temperature environment of 75°C for 8 weeks and then left in a temperature environment of 23°C for 24 hours to prepare a test sample after the storage.

(Adhesiveness between Blowing Agent-Containing Pressure-Sensitive Adhesive Layer and Peelable or Peel-Assisting Film)

In a temperature environment of 23°C, the adhesive strength (normal adhesive strength) between the blowing agent-containing pressure-sensitive adhesive layer and the peelable or peel-assisting film was determined in the test sample in accordance with the below measurement method of adhesive strength between blowing agent-containing pressure-sensitive adhesive layer and peelable or peel-assisting film and evaluated based on the following criteria.

Criteria

Very good (A): the adhesive strength was 5.0 N/15 mm or more.
Good (B): the adhesive strength was more than 2.5 N/15 mm and less than 5.0 N/15 mm.
Poor (C): the adhesive strength was 2.5 N/15 mm or less.

In a pressure-sensitive adhesive tape evaluated as very good or good adhesiveness, the blowing agent-containing pressure-sensitive adhesive layer is bonded to the peelable or peel-assisting film without troubles, and such adhesive tape provides good adhesion characteristics during bonding to an adherend.
In contrast, a pressure-sensitive adhesive tape evaluated as poor adhesiveness has poor adhesiveness between the blowing agent-containing pressure-sensitive adhesive layer and the peelable or peel-assisting film, and the adhesion characteristics may be reduced. For example, if strong stress is applied, delamination may occur between the blowing agent-containing pressure-sensitive adhesive layer and the peelable or peel-assisting film to separate bonded articles.

(Thermal Debonding Performance of Pressure-Sensitive Adhesive Tape)

The test sample was placed in a hot-air drier and heated at 160°C for 10 minutes. After the heat treatment, the sample was observed whether the delamination was caused between the blowing agent-containing pressure-sensitive adhesive layer and the peelable or peel-assisting film by expansion or foaming of the blowing agent by heat. When the delamination was observed, the thermal debonding performance was evaluated as "very good (A)".
When the delamination was not observed, the sample was left in a temperature environment of 23°C for 2 hours, and then the adhesive strength between the blowing agent-containing pressure-sensitive adhesive layer and the peelable or peel-assisting film was determined in accordance with the below measurement method of adhesive strength between blowing agent-containing pressure-sensitive adhesive layer and peelable or peel-assisting film and evaluated based on the following criteria.

Criteria

Very good (A): the adhesive strength was 0.5 N/15 mm or less.
Good (B): the adhesive strength was more than 0.5 N/15 mm and less than 2.0 N/15 mm.
Poor (C): the adhesive strength was 2.0 N/15 mm or more.

In a pressure-sensitive adhesive tape having an adhesive strength between the blowing agent-containing pressure-sensitive adhesive layer and the peelable or peel-assisting film of 0.5 N/15 mm or less, the blowing agent-containing pressure-sensitive adhesive layer is spontaneously separated from the peelable or peel-assisting film. In a pressure-sensitive adhesive tape having an adhesive strength between the blowing agent-containing pressure-sensitive adhesive layer and the peelable or peel-assisting film of more than 0.5 N/15 mm and less than 2.0 N/15 mm, the blowing agent-containing pressure-sensitive adhesive layer can be readily separated from the peelable or peel-assisting film by hand. In a pressure-sensitive adhesive tape having an adhesive strength between the blowing agent-containing pressure-sensitive adhesive layer and the peelable or peel-assisting film of 2.0 N/15 mm or more, the blowing agent-containing pressure-sensitive adhesive layer cannot readily separated from the peelable or peel-assisting film by hand.

(Measurement Method of Adhesive Strength between Blowing Agent-Containing Pressure-Sensitive Adhesive Layer and Peelable or Peel-Assisting Film)

Using a tensile tester (tester name "TG-1kN", manufactured by Minebea Co., Ltd.), at a pulling rate of 300 mm/min and a peeling direction of 180°, a test sample was peeled between the blowing agent-containing pressure-sensitive adhesive layer and the peelable or peel-assisting film to determine the adhesive strength between the blowing agent-containing pressure-sensitive adhesive layer and the peelable or peel-assisting film.

[Table 1]

| | Peelable or peel-assisting film layer | | Initial state | | | | after storage (after storage at 75°C for 8 weeks) | | | |
|---|---|---|---|---|---|---|---|---|---|---|
| | | | Adhesiveness | | Thermal debonding performance | | Adhesiveness | | Thermal debonding performance | |
| | | Thickness | Peel force [N/15mm] | Evaluation | Peel force N/15mm] | Evaluation | Peel force [N/15mm] | Evaluation | Peel force [N/15mm] | Evaluation |
| Example 1 | Polycarbonate film | 30 μm | 99 | B | 0 | A | 10 3 | B | 0 | A |
| Example 2 | ABS film | 1 mm | 83 | B | 0 | A | 8 5 | B | 0.6 | B |
| Comparative example 1 | Polyester film | 12 μm | 66 | B | 0 | A | 11 3 | B | 25 | C |

An interlayer adhesive strength of 0 N/15 mm in the thermal debonding performance means the delamination between the blowing agent-containing pressure-sensitive adhesive layer and the peelable or peel-assisting film.

The tapes of Examples were evaluated to have good adhesivenesses at the initial state and after the storage and showed good adhesion characteristics. The tapes were also evaluated to have very good or good thermal debonding performance at the initial state and after the storage, and the blowing agent-containing pressure-sensitive adhesive layer could be readily debonded from the peelable or peel-assisting film by heating. Moreover, the tapes were evaluated to have excellent thermal debonding performance even after the storage at 75°C for one year. Therefore, the tapes in Examples have excellent thermal debonding performance even after the storage at room temperature (23 ± 2°C) for a long time.

The tape in Comparative Example 1 was evaluated to have good adhesivenesses at the initial state and after the storage and showed good adhesion characteristics. However, the tape was evaluated to have poor thermal debonding performance after the storage, and the blowing agent-containing pressure-sensitive adhesive layer could not be readily debonded from the peelable or peel-assisting film.

**Reference Signs List**

11    Pressure-sensitive adhesive layer D

12    Peelable or peel-assisting film layer C

13    Blowing agent-containing pressure-sensitive adhesive layer A

14    Microparticle-containing viscoelastic substrate B

15    Separator

21    Liner substrate

22    Bubble-bearing microparticle-containing viscoelastic substrate

23    Blowing agent-containing pressure-sensitive adhesive layer

24    Peelable or peel-assisting film layer

25    Pressure-sensitive adhesive layer

26    Solid plate for measurement

**Claims**

1.  A heat-expandable removable pressure-sensitive adhesive tape or sheet, at least comprising:

    a blowing agent-containing pressure-sensitive adhesive layer A;
    a microparticle-containing viscoelastic substrate B;
    a peelable or peel-assisting film layer C; and
    a pressure-sensitive adhesive layer D,
    wherein a multilayer structure containing at least the peelable or peel-assisting film layer C and the pressure-sensitive adhesive layer D is arranged on at least one side of the blowing agent-containing pressure-sensitive adhesive layer A, the blowing agent-containing pressure-sensitive adhesive layer A is in direct contact with the peelable or peel-assisting film layer C, and the peelable or peel-assisting film layer C is optionally removed from the blowing agent-containing pressure-sensitive adhesive layer A by heat treatment after storage in an atmosphere of 75°C for 8 weeks.

2.  The heat-expandable removable pressure-sensitive adhesive tape or sheet according to claim 1, wherein the multilayer structure containing at least the peelable or peel-assisting film layer C and the pressure-sensitive adhesive layer D is a multilayer structure composed of the peelable or peel-assisting film layer C and the pressure-sensitive adhesive layer D.

3. The heat-expandable removable pressure-sensitive adhesive tape or sheet according to claim 1 or 2, wherein the peelable or peel-assisting film layer C is a plastic film.

4. The heat-expandable removable pressure-sensitive adhesive tape or sheet according to any one of claims 1 to 3, wherein the peelable or peel-assisting film layer C includes at least one resin selected from a polycarbonate resin and an ABS resin.

5. The heat-expandable removable pressure-sensitive adhesive tape or sheet according to any one of claims 1 to 4, wherein the microparticle-containing viscoelastic substrate B is a layer formed from a microparticle-containing polymerizable composition that includes a mixture of acrylic monomers containing an alkyl (meth)acrylate including an alkyl group having 2 to 18 carbon atoms or a partial polymer thereof, a photoinitiator, microparticles, and a polyfunctional (meth)acrylate.

6. The heat-expandable removable pressure-sensitive adhesive tape or sheet according to any one of claims 1 to 5, wherein the microparticle-containing viscoelastic substrate B includes the microparticles having an average particle diameter of 30 to 100 $\mu$m.

7. The heat-expandable removable pressure-sensitive adhesive tape or sheet according to any one of claims 1 to 6, wherein the microparticle-containing viscoelastic substrate B includes the microparticles in an amount of 1 to 20% by weight based on the total weight (100% by weight) of the microparticle -containing viscoelastic substrate B.

8. The heat-expandable removable pressure-sensitive adhesive tape or sheet according to any one of claims 1 to 7, wherein the blowing agent-containing pressure-sensitive adhesive layer A is a layer formed from a blowing agent-containing pressure-sensitive adhesive composition that includes a mixture of acrylic monomers containing an alkyl (meth)acrylate including an alkyl group having 2 to 18 carbon atoms or a partial polymer thereof, a photoinitiator, a blowing agent, and a polyfunctional (meth)acrylate, and the blowing agent-containing pressure-sensitive adhesive layer A has a solvent-insoluble content of 50 to 99% by weight.

9. The heat-expandable removable pressure-sensitive adhesive tape or sheet according to any one of claims 1 to 8, wherein the blowing agent-containing pressure-sensitive adhesive layer A includes a blowing agent that is heat-expandable microspheres.

10. The heat-expandable removable pressure-sensitive adhesive tape or sheet according to any one of claims 1 to 9, wherein the blowing agent-containing pressure-sensitive adhesive layer A has a thickness of 1 to 300 $\mu$m.

11. A method of removing a heat-expandable removable pressure-sensitive adhesive tape or sheet, the method comprising:

heating a heat-expandable removable acrylic pressure-sensitive adhesive tape or sheet at least including a blowing agent-containing pressure-sensitive adhesive layer A, a microparticle-containing viscoelastic substrate B, a peelable or peel-assisting film layer C, and a pressure-sensitive adhesive layer D, a multilayer structure containing at least the peelable or peel-assisting film layer C and the pressure-sensitive adhesive layer D being arranged on at least one side of the blowing agent-containing pressure-sensitive adhesive layer A, the blowing agent-containing pressure-sensitive adhesive layer A being in direct contact with the peelable or peel-assisting film layer C, the peelable or peel-assisting film layer C being optionally removed from the blowing agent-containing pressure-sensitive adhesive layer A by heat treatment after storage in an atmosphere of 75°C for 8 weeks; and
reducing an adhesive strength of the peelable or peel-assisting film layer C to the blowing agent-containing pressure-sensitive adhesive layer A for removing.

[Fig.1]

[Fig.2]

[Fig.3]

Europäisches
Patentamt

European
Patent Office

Office européen
des brevets

**EUROPEAN SEARCH REPORT**

Application Number

EP 12 18 7290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/048701 A1 (NITTO EUROP NV [BE]; NITTO DENKO CORP [JP]; VANDENHOLT MYRIAM [BE]; BO) 28 April 2011 (2011-04-28)<br>* paragraph [0005] - paragraph [0006] *<br>* paragraph [0012] - paragraph [0016] *<br>* paragraph [0022] *<br>* paragraph [0024] *<br>* paragraph [0108] *<br>* paragraph [0170] - paragraph [0174] *<br>* paragraph [0177] - paragraph [0181]; examples 2-6 *<br>* figures 4B, 4C, 4D *<br>* claims 1, 3, 4, 5, 8-16 *<br>----- | 1-3,5-11 | INV.<br>C09J7/02<br>C09J5/08 |
| X | EP 2 204 425 A1 (NITTO DENKO CORP [JP]; NITTO EUROP N V [BE])<br>7 July 2010 (2010-07-07)<br>* paragraph [0007] *<br>* paragraph [0028] *<br>* paragraph [0132] - paragraph [0133] *<br>* paragraph [0186] - paragraph [0189] *<br>* paragraph [0192] - paragraph [0194] *<br>* paragraph [0196] - paragraph [0200]; examples 2-6 *<br>* paragraph [0202] - paragraph [0203]; examples 8, 9 *<br>* paragraph [0206]; example 12 *<br>* figures 4B, 4C, 4D *<br>* claims 1, 3-17 *<br>& JP 2009 120808 A (NITTO DENKO CORP; NITTO EUROP NV) 4 June 2009 (2009-06-04)<br>* the whole document *<br>----- | 1-3,5-11 | TECHNICAL FIELDS SEARCHED (IPC)<br><br>C09J |

-/--

The present search report has been drawn up for all claims

| Place of search | Date of completion of the search | Examiner |
|---|---|---|
| Munich | 25 January 2013 | Siemsen, Beatrice |

EPO FORM 1503 03.82 (P04C01)

**EUROPEAN SEARCH REPORT**

Application Number

EP 12 18 7290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 354 925 A1 (NITTO DENKO CORP [JP]) 22 October 2003 (2003-10-22) <br> * paragraph [0006] * <br> * paragraph [0011] * <br> * paragraph [0015] * <br> * paragraph [0023] * <br> * paragraph [0026] - paragraph [0027] * <br> * paragraph [0030] - paragraph [0032] * <br> * paragraph [0034] * <br> * paragraph [0038] * <br> * paragraph [0066] * <br> * figure 2 * <br> * claims 1, 2 * <br> ----- | 1,3,5-11 | |
| A | US 2011/094675 A1 (SATO MASAAKI [JP] ET AL) 28 April 2011 (2011-04-28) <br> * paragraph [0019] * <br> * paragraph [0032] - paragraph [0033] * <br> * paragraph [0050] - paragraph [0051] * <br> * paragraph [0054] - paragraph [0055] * <br> * figure 2 * <br> ----- | 1-11 | TECHNICAL FIELDS SEARCHED (IPC) |

The present search report has been drawn up for all claims

| Place of search | Date of completion of the search | Examiner |
|---|---|---|
| Munich | 25 January 2013 | Siemsen, Beatrice |

EPO FORM 1503 03.82 (P04C01)

# EP 2 578 654 A1

## ANNEX TO THE EUROPEAN SEARCH REPORT
## ON EUROPEAN PATENT APPLICATION NO.

EP 12 18 7290

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2013

| Patent document cited in search report | | | Publication date | Patent family member(s) | | | Publication date |
|---|---|---|---|---|---|---|---|
| WO 2011048701 | A1 | | 28-04-2011 | NONE | | | |
| EP 2204425 | A1 | | 07-07-2010 | CN | 101835862 | A | 15-09-2010 |
| | | | | EP | 2204425 | A1 | 07-07-2010 |
| | | | | JP | 2009120808 | A | 04-06-2009 |
| | | | | US | 2012034407 | A1 | 09-02-2012 |
| EP 1354925 | A1 | | 22-10-2003 | CN | 1451707 | A | 29-10-2003 |
| | | | | DE | 60304763 | T2 | 14-09-2006 |
| | | | | EP | 1354925 | A1 | 22-10-2003 |
| | | | | JP | 3853247 | B2 | 06-12-2006 |
| | | | | JP | 2003306653 | A | 31-10-2003 |
| | | | | SG | 107634 | A1 | 29-12-2004 |
| | | | | TW | I255844 | B | 01-06-2006 |
| US 2011094675 | A1 | | 28-04-2011 | CN | 102077135 | A | 25-05-2011 |
| | | | | JP | 2010039472 | A | 18-02-2010 |
| | | | | TW | 201013605 | A | 01-04-2010 |
| | | | | US | 2011094675 | A1 | 28-04-2011 |
| | | | | WO | 2010004678 | A1 | 14-01-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009120807 A
- JP 2009120808 A
- JP 2008012798 A
- JP 2006022189 A